# EUROPEAN PATENT APPLICATION

(11) **EP 1 367 259 A1**
(43) Date of publication of application: **03.12.2003**
(21) Application number: 02712395.9
(22) Date of filing: 15.02.2002
(51) Int. Cl.: F04B 39/02

(54) **FREEZER**

(30) Priority: 15.02.2001 JP 2001038616
(71) Applicant: Toshiba Carrier Corporation, Tokyo 105-8001 (JP)
(72) Inventor: HATTORI, Hitoshi, Fuji-shi, Shizuoka 416-0932 (JP)
(74) Representative: Henkel, Feiler, Hänzel
(86) International application number: JP0201312
(87) International publication number: WO02064979

(57) **Abstract**

If a refrigerating cycle has been formed, the flow-rate adjusting valves (11), (21) and (31) are controlled in opening. When the temperature (Td) of refrigerant discharged rises above a preset value (Tds), the minimum opening (Qmin) for the flow-rate adjusting valves (11), (21) and (31) is changed to a value greater than a normal value. An oil pipe (31) is connected between the sealed case (1c) of a compressor (1) and a refrigerant-drawing pipe (18) through which refrigerant passes to be drawn into the compressor (1). A capillary tube (33) is provided on the oil pipe (31). Two temperature sensors (34, 35) detect temperatures at those parts of the oil pipe (31), which are at upstream and downstream of the capillary tube (33), respectively. An amount of lubricating oil (L) in the sealed case (1c) is detected from the temperatures detected.

## Description

### Technical Field

The present invention relates to a refrigerating apparatus comprising a high-pressure type compressor which is held in a sealed case filled with lubricating oil and which draws and discharges refrigerant.

### Background Art

High-pressure type compressor type to be incorporated in refrigerating apparatus such as air conditioners are held, each in a sealed case. The sealed case is filled with lubricating oil. Part of the lubricating oil is discharged, together with refrigerant, as the compressor draws and discharges the refrigerant during each refrigerating cycle. Therefore, the lubricating oil may become insufficient. If this happens, the sliding parts of the compressor will not be well oiled, inevitably shortening the lifetime of the compressor.

To cope with this undesirable state, an oil-level adjuster of float-switch type may be used. Jpn. Pat. Appln. KOKAI Publication No. 7-103584, for example, discloses an oil-level adjuster of float-switch type. This oil-level adjuster has a float on the surface of oil supplied from a sealed case into a vessel via an oil pipe. It is configured to detect the oil level (i.e., the amount of oil in the vessel) from the up-and-down motion of the float. The publication teaches that oil separators provided in the refrigerant outlet pipes of several compressors trap the lubricating oil discharged together with refrigerant. The lubricating oil trapped is supplied from the oil separators back to the compressors that lack in lubricating oil.

The oil-level adjuster of float-switch type is not only expensive but also liable to fault. If several compressors are used, each needs to have on one oil-level adjuster. This inevitably raises the cost.

### Disclosure of Invention

A refrigerating apparatus according to a first aspect of this invention is designed such that the amount of the lubricating oil in the sealed case of the compressor can be detected with high reliability and precision, without using any mechanical switches.

A refrigerating apparatus according to the first aspect of the invention comprises: a compressor which is covered with a sealed case filled in lubricating oil and which draws and discharges refrigerant;
an oil pipe into which the lubricating oil flows from the sealed case of the compressor, the oil pipe connected between the sealed case of the compressor and a refrigerant-drawing pipe through which the refrigerant passes;
a pressure reducing unit provided on the oil pipe;
a first temperature sensor which detects a temperature at that part of the oil pipe which lies at upstream of the pressure reducing unit;
a second temperature sensor which detects a temperature as that part of the oil pipe which lies at downstream of the pressure reducing unit; and
a detecting section which detects an amount of oil in the sealed case of the compressor from a difference between a temperature detected by the first temperature sensor and a temperature detected by the second temperature sensor.

### Brief Description of Drawings

FIG. 1 is a diagram showing the first embodiment;
FIG. 2 is a flowchart explaining how the amount of oil is detected in the first embodiment;
FIG. 3 is a diagram illustrating how each temperature detected changes in the first embodiment;
FIG. 4 is a diagram representing a difference between the temperatures detected in the heating mode and a difference between the temperature detected in the cooling mode, in the first embodiment;
FIG. 5 is a diagram depicting the second embodiment;
FIG. 6 is a diagram showing the major components of the third embodiment;
FIG. 7 is a diagram illustrating the major components of the fourth embodiment;
FIG. 8 is a diagram displaying the major components of the fifth embodiment;
FIG. 9 is a diagram showing the major components of the sixth embodiment;
FIG. 10 is a diagram showing the entire sixth embodiment;
FIG. 11 is a diagram illustrating the major components of the seventh embodiment;
FIG. 12 is a diagram depicting the major components of the eighth embodiment; and
FIG. 13 is a diagram showing the major components of the ninth embodiment.

### Best Mode for Carrying Out the Invention

### [1] The first embodiment of this invention will be described with reference to the drawings.

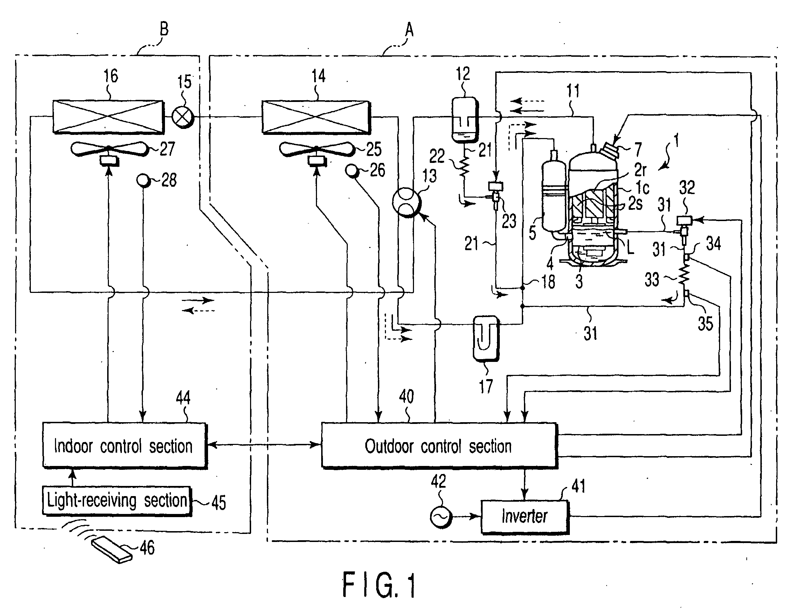

As FIG. 1 shows, an air conditioner has an outdoor unit A. The outdoor unit A comprises a high-pressure type compressor 1 that is held in a sealed case 1c. The sealed case 1c contains an electric motor that comprises a stator 2s and a rotor 2r. It contains a compressing section 3, too. A suction pipe 4 and an accumulator 5 connect the compressing section 3 to a refrigerant-drawing pipe 18, which will be described later. Refrigerant is drawn via the refrigerant-drawing pipe 18 into the section 3. The section 3 compresses the refrigerant, which is discharged into the sealed case 1c. The refrigerant discharged flows into the refrigerating cycle through a refrigerant-discharging pipe 11. The sealed case 1c further contains lubricating oil L that lubricates the sliding parts including the compression section 3.

The refrigerant-discharging pipe 11 is connected to an oil separator 12, to which a four-way valve 13 is coupled. The four-way valve 13 is connected to an outdoor heat exchanger 14 by an expansion valve 15 of an indoor unit B. The heat exchanger 14 is connected to the refrigerant-drawing pipe 18 by the four-way valve 13 and an accumulator 17. The refrigerant-drawing pipe 18 is connected to the above-mentioned accumulator 5.

As long as the four-way valve 13 remains off (as shown in FIG. 1), the refrigerant (gas) discharged from the compressor 1 flows into the outdoor heat exchanger 14 through the refrigerant-discharging pipe 11, oil separator 12 and four-way valve 13. In the outdoor heat exchanger 14 the refrigerant releases heat into the outdoor space and is liquefied. The refrigerant (liquid) flows from the indoor heat exchanger 16 via the expansion valve 15. In the indoor heat exchanger 16 the refrigerant evaporates, absorbing heat from the room. The air in the room is thereby cooled. The refrigerant (gas) is drawn from the indoor heat exchanger 16 into the compressor 1 through the four-way valve 13, accumulator 17 and refrigerant-drawing pipe 18.

When the four-way valve 13 is turned on, the refrigerant (gas) discharged from the compressor 1 flows into the indoor heat exchanger 16 through the refrigerant-discharging pipe 11 and the four-way valve 13. In the indoor heat exchanger 16 the refrigerant releases heat into the air in the room and is liquefied. The air in the room is therefore heated. The refrigerant (liquid) flows from the indoor heat exchanger 16 into the outdoor heat exchanger 14 via the expansion valve 15. In the outdoor heat exchanger 14 the liquid absorbs heat from the outdoor air and evaporates. The refrigerant (gas) is drawn from the outdoor heat exchanger 14 into the compressor 1 through the four-way valve 13, accumulator 17 and refrigerant-drawing pipe 18.

In the refrigerating apparatus with a heat-pump refrigerating cycle, described above, an oil-returning pipe 21 connects the oil separator 12 and the refrigerant-drawing pipe 18, and a capillary tube 22 and a two-way valve 23 are provided on the oil-returning pipe 21. When the two-way valve 23 is opened, the lubricating oil L flows from the oil separator 12 into the refrigerant-drawing pipe 18 via the oil-returning pipe 21, capillary tube 22 and two-way valve 23.

An outdoor fan 25 and an outdoor-air temperature sensor 26 are provided near the outdoor heat exchanger 14. An indoor fan 27 and an indoor-air temperature sensor 28 are provided near the indoor heat exchanger 16.

An oil pipe 31 is connected at one end to one side of the sealed case 1c of the compressor 1. The other end of the oil pip 31 is connected to the refrigerant-drawing pipe 18. The position where the oil pipe 31 is connected to the sealed case 1c is at a level that is appropriate for the lubricating oil L in the sealed case 1c. A two-way valve 32 and a pressure reducing unit, such as a capillary tube 33, are provided on the oil pipe 31. A first temperature sensor 34 and a second temperature sensor 35 are provided on the oil pipe 31, too, at upstream and downstream of the capillary tube 33.

If the surface of the lubricating oil L in the sealed case 1c has reached the appropriate level, the oil L flows from the sealed case 1c into the oil pipe 31 when the two-way valve 32 is opened. The oil L then flows into the refrigerant-drawing pipe 18. If the surface of the lubricating oil L in the sealed case 1c has not reached the appropriate level, the gas refrigerant flows from the sealed case 1c into the oil pipe 31 when the two-way valve 32 is opened. The gas refrigerant in the sealed case 1c flows into the oil pipe 31 and thence into the refrigerant-drawing pipe 18 through the two-way valve 32 and capillary tube 33.

The outdoor unit A comprises an outdoor control section 40. The indoor unit B comprises an indoor control section 44.

To the outdoor control section 40, the four-way valve 13, two-way valve 23, outdoor fan 25, outdoor-air temperature sensor 26, two-way valve 32, temperature sensors 34 and 35 are connected. An inverter 41 is connected to the outdoor control section 41, too. The inverter 41 rectifies the voltage of the commercially available power supply 42. It then converts the voltage (now rectified) to a voltage of the frequency that accords with a command supplied from the outdoor control section 40. A cable connects the output terminal of the inverter 41 is connected to the power-supply terminal 7 provided on the compressor 1.

To the indoor control section 44, the indoor fan 27 and indoor-air temperature sensor 28 are connected. A light-receiving section 45 is connected to the indoor control section 44, too. The light-receiving section 45 receives an infrared beam emitted from a remote controller 46. It inputs the data represented by the beam, to the indoor control section 44. When operated by the user, the remote controller 46 emits the infrared beam to turn on or off the refrigerating apparatus and sets various operating conditions, such as operating mode of the apparatus (cooling, dehumidification, heating, air-distribution, or the like), the desired indoor-air temperature and the like.

A signal line connects the outdoor control section 40 and the indoor control section 44. The sections 40 and 44 have the following means (1) for performing the main function:
(1) Control means for obtaining an air-conditioning load, or a difference between the temperature detected by the indoor-air temperature sensor 28 and the indoor-air temperature set by operating the remote controller 46 and for controlling the operating frequency of the compressor 1 (i.e., the output frequency of the inverter 41)

The outdoor control section 40 comprises the following means (11) and (12) that serve to detect the amount of oil existing in the compressor 1:
(11) Detecting means for opening the two-way valve 32 at regular intervals set by an internal timer (for example, 5 minutes), each time for a predetermined period and for comparing the temperatures T1 and T2 detected by the temperature sensors 34 and 35, respectively, while the valve 32 remains open, thereby to detect the amount of oil existing in the sealed case 1c of the compressor 1.
(12) Control means for opening the two-way valve 23 for a predetermined period when the detecting means detects that the amount of oil is insufficient

The means described in the paragraph (11), and the oil pipe 31, two-way valve 32, capillary tube 33, described above and temperature sensors 34 and 35 constitute a device for detecting the amount of oil.

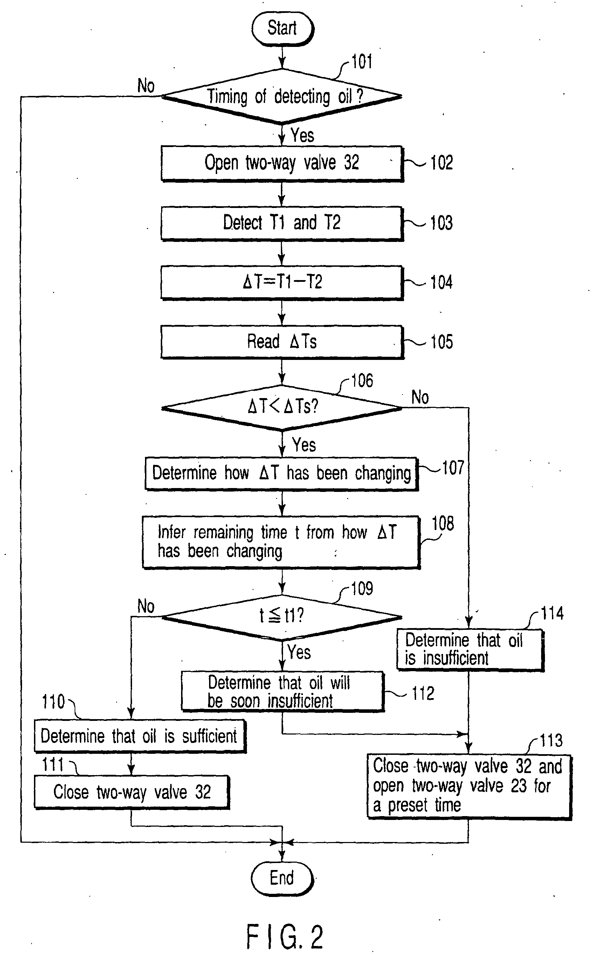

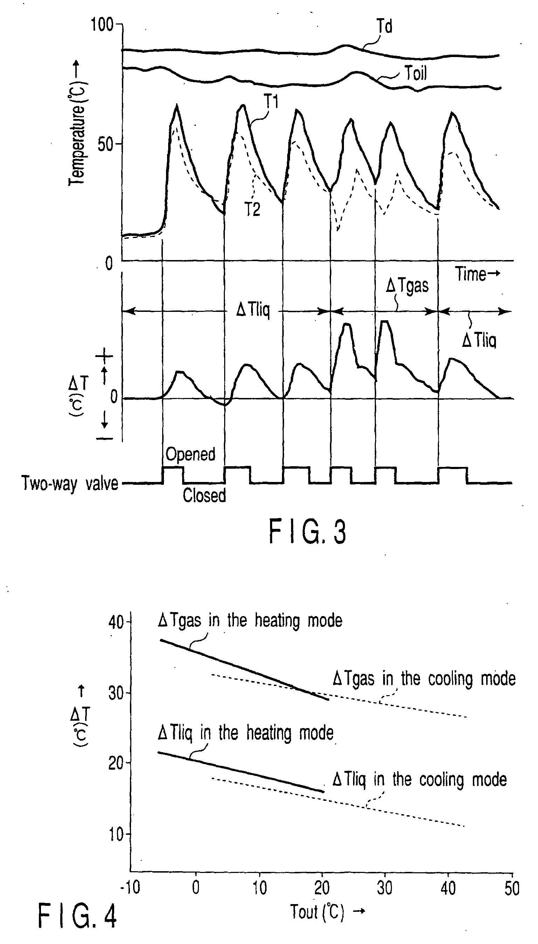

The operation of the apparatus will be described, with reference to the flowchart of FIG. 2 and the timing chart of FIG. 3.

It is determined whether the timing of detecting the lubricating oil L has come, from the count made by the internal timer (Step 101). If YES, the two-way valve 32 is opened (Step 102).

If the surface of the lubricating oil L has reached the appropriate level in the sealed case 1c, the lubricating oil flows into the oil pipe 31 when the two-way valve 32 is opened. The liquid refrigerant may flow into the oil pipe 31, mixed in the lubricating oil L. The liquid thus flown into the oil pipe 31 passes through the two-way valve 32 and capillary tube 33 and flows into the refrigerant-drawing pipe 18.

If the surface of the lubricating oil L has not reached the appropriate level in the sealed case 1c, the gas refrigerant flows from the sealed case 1c into the oil pipe 31 when the two-way valve 32 is opened. The gas flows from the oil pipe 31 into the refrigerant-drawing pipe 18 via the two-way valve 32 and capillary tube 33.

The temperature sensor 34 detects the temperature T1 of the liquid or gas that has flown into the oil pipe 31, and the temperature sensor 35 detects the temperature T2 of the liquid or gas that has flown through the capillary tube 33 (Step 103). The difference ΔT between the temperatures T1 and T2 detected is obtained (Step 104).

The internal memory provided in the outdoor control section 40 stores a preset value ΔTs for the temperature difference ΔT. (For example, ΔTs = 33°C if the temperature in the room is 30°C during the heating, while the outdoor air temperature is 7°C.) The preset value ΔTs read from the memory (Sep 105). The preset value ΔTs is compared with the temperature difference ΔT (Step 106).

If the surface of the lubricating oil L has reached the appropriate level in the sealed case 1c and liquid has flown into the oil pipe 31, the temperature T2 changes with respect to the temperature T1 only a little for the heat radiated at the capillary tube 33. Hence, the temperature difference ΔT is less than the preset value ΔTs (YES in Step 106). In this case, it is determined how much the temperature difference ΔT has changed from the value detected at the immediately preceding detection timing (Step 107). From the change thus determined and the experimental data stored in the internal memory of the outdoor control section 40, the remaining time t is inferred, upon lapse of which the lubricating oil will be insufficient (that is, the surface of the lubricating oil L will fall below the appropriate level in the sealed case 1c) (Step 108).

If the remaining time t inferred is longer than a preset time t1 (if NO in Step 109), it is determined that the lubricating oil in the sealed case 1c is sufficient (Step 110). Then, the two-way valve 32 is closed (Step 111). Thus, the amount of the oil is detected.

If the remaining time t inferred is equal to or shorter than the preset time t1 (if YES in Step 109), it is determined that the lubricating oil will be soon insufficient (Step 112). In this case, the two-way valve 32 is closed and the two-way valve 23 is opened for a prescribed time (Step 113). While the two-way valve 23 remains open, the lubricating oil L accumulated in the oil separator 12 flows into the refrigerant-drawing pipe 18 through the capillary tube 22 and two-way valve 23. The lubricating oil L is collected in the refrigerant-drawing pipe 18, drawn into the compressor 1 as it receives a drawing pressure applied from the compressor 1. That is, the lubricating oil L is replenished before it becomes insufficient.

The temperature difference ΔT at the time the liquid flows into the oil tube 31 is shown as ΔTliq in FIG. 3.

If the surface of the lubricating oil L has not reached the appropriate level in the sealed case 1c and gas has flown into the oil pipe 31, the temperature T2 detected is much lower than the temperature T1 detected. Thus, the temperature difference ΔT is equal to or greater than the preset value ΔTs (NO in Step 106). In this case, it is determined that the lubricating oil L is insufficient in the sealed case 1c.

When it is determined that the oil is insufficient, the two-way valve 32 is closed, and the two-way valve 23 is opened for a prescribed time (Step 113). While the two-way valve 23 remains open, the lubricating oil L accumulated in the oil separator 12 flows into the refrigerant-drawing pipe 18 through the capillary tube 22 and two-way valve 23. The lubricating oil L is collected in the compressor 1, drawn from the refrigerant-drawing pipe 18 as it receives a drawing pressure applied from the compressor 1. That is, the lubricating oil L is replenished before it becomes insufficient. This immediately eliminates the lack in lubricating oil.

The temperature difference ΔT at the time the gas flows into the oil tube 31 is shown as ΔTgas in FIG. 3.

As described above, the oil pipe 31, two-way valve 32, capillary tube 33 and temperature sensors 34 and 35 are provided, and the temperatures T1 and T2, respectively detected by the temperature sensors 34 and 35, are compared. This simple method can detect the amount of the lubricating oil present in the sealed case 1c, reliably and correctly, without using mechanical floats switch such as the conventional oil-level adjusters of float-switch type.

The two-way valve 32 is held open at the detecting timing, for only a short time of about 30 to 90 seconds. Thus, the amount of oil can be detected fast, avoiding an undesirable decrease in the performance of the compressor 1. Further, the detecting the amount of oil will not result in insufficiency of oil, no matter how many times it is repeated. This is because the lubricating oil L flows from the sealed case 1c into the oil pipe 31 during the detection, but flows back into the compressor 1 through the refrigerant-drawing pipe 18.

The remaining time t, upon lapse of which the lubricating oil will be insufficient, is inferred on the basis of how the temperature difference ΔT changes. When the remaining time t becomes too short, the lubricating oil L is replenished. This prevents oil insufficiency as much as possible.

As FIG. 4 shows, the temperature difference ΔT (ΔTliq, ΔTgas) assumes one value in the heating mode and another value in the cooling mode. In view of this, two values ΔTs may be preset for the heating mode and the cooling mode, respectively, and may be stored into the internal memory of the outdoor control section 40. Then, one of these present values may be read, in accordance with the selected operation mode, either the heating mode or the cooling mode, and the preset value ΔTs read may be compared with the temperature difference ΔT. Thus, the amount of the lubricating oil in the sealed case 1c can be reliably detected.

As mentioned above, the liquid refrigerant may flow into the oil pipe 31, mixed in a small amount with the lubricating oil L. If the content of the liquid refrigerant with respect to the lubricating oil L is known, the preset value ΔTs may be corrected in accordance with the content of the refrigerant. This makes it possible to detect the amount of oil more accurately, not influenced by the mixing of the liquid refrigerant with the lubricating oil L.

### [2] The second embodiment will be described.

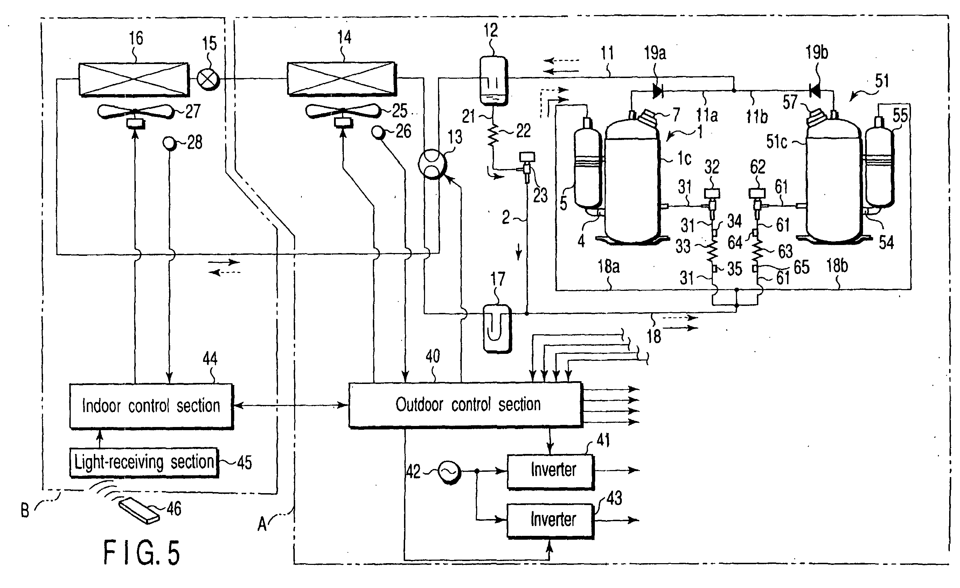

As FIG. 5 depicts, two compressors 1 and 51 are connected in parallel by a refrigerant pipe. The refrigerant discharged from the compressor 1 flows into a common refrigerant-discharging pipe 11 via an individual refrigerant-discharging pipe 11a. The refrigerant discharged from the compressor 51 flows into the common refrigerant-discharging pipe 11 via an individual refrigerant-discharging pipe 11b. Check valves 19a and 19b are provided on the individual refrigerant-discharging pipes 11a and 11b, respectively. The refrigerant flows from a common refrigerant-drawing pipe 18 into the accumulator 5 of the compressor 1 via an individual refrigerant-drawing pipe 18a, and into the accumulator 55 of the compressor 51 via an individual refrigerant-drawing pipe 18b. All other components, including separator 12 and accumulator 17, are identical to those shown in FIG. 1. The refrigerating cycle illustrated in FIG. 1 is of the type which comprises one outdoor unit A and one indoor unit B connected to the outdoor unit A. Instead, a multi-type refrigerating cycle may be employed, which comprises one outdoor unit A and a plurality of indoor units B connected to the outdoor unit A.

Like the compressor 1, the compressor 51 has a sealed case 51c that incorporates an electric motor and a compressing section 3 and contains lubricating oil L. It draws the refrigerant from the refrigerant-drawing pipe 18b through a suction pipe 54 and the accumulator 55, compresses the refrigerant and discharges the refrigerant into the sealed case 51c. The refrigerant flows into the refrigerating cycle via the individual refrigerant-discharging pipe 11b that is coupled to the top of the sealed case 51c.

An inverter 43 that is identical to the inverter 41 and provided to drive the compressor 51 is connected to an outdoor control section 40. The inverter 43 rectifies the voltage of the commercially available power supply 42. It then converts the voltage (now rectified) to a voltage of the frequency that accords with a command supplied from the outdoor control section 40. A cable connects the output terminal of the inverter 43 is connected to the power-supply terminal 57 provided on the compressor 1.

Oil pipes 31 and 61 are connected at one end to the sealed cases 1c and 51c, respectively, and at the other end to the common refrigerant-drawing pipe 18. The oil pipe 31 is connected to the sealed case 1c are connected at a level that is appropriate for the lubricating oil L in the sealed case 1c. The oil pipe 61 is connected to the sealed case 51c at a level that is appropriate for the lubricating oil L in the sealed case 51c.

A two-way valve 32 and a pressure reducing unit, such as a capillary tube 33, are provided on the oil pipe 31. A two-way valve 62 and a pressure reducing unit, such as a capillary tube 63, are provided on the oil pipe 61. A first temperature sensor 34 and a second temperature sensor 35 are provided on the oil pipe 31, respectively at upstream and downstream of the capillary tube 33, respectively. Similarly, a first temperature sensor 64 and a second temperature sensor 65 are provided on the oil pipe 61, respectively upstream and downstream of the capillary tube 63. The two-way valves 32 and 62, first temperature sensors 34 and 64 and second temperature sensors 35 and 65 are connected to the outdoor control section 40.

If the surface of the lubricating oil L in the sealed case 1c has reached the appropriate level, the oil L flows from the sealed case 1c into the oil pipe 31 when the two-way valve 32 is opened. The oil L then flows into the refrigerant-drawing pipe 18 through the two-way valve 32 and the capillary tube 33. If the surface of the lubricating oil L in the sealed case 1c has not reached the appropriate level, the gas refrigerant flows from the sealed case 1c into the oil pipe 31 when the two-way valve 32 is opened. The gas refrigerant then flows into the refrigerant-drawing pipe 18 through the two-way valve 32 and capillary tube 33.

If the surface of the lubricating oil L in the sealed case 51c has reached the appropriate level, the oil L flows from the sealed case 51c into the oil pipe 61 when the two-way valve 62 is opened. The oil L then flows into the refrigerant-drawing pipe 18 through the two-way valve 62 and the capillary tube 63. If the surface of the lubricating oil L in the sealed case 51c has not reached the appropriate level, the gas refrigerant flows from the sealed case 1c into the oil pipe 31 when the two-way valve 62 is opened. The gas refrigerant then flows into the refrigerant-drawing pipe 18 through the two-way valve 62 and capillary tube 63.

A signal line connects the outdoor control section 40 and the indoor control section 44. The sections 40 and 44 have the following means (1) for performing the main function:
(1) Control means for obtaining an air-conditioning load, or a difference between the temperature detected by the indoor-air temperature sensor 28 and the indoor-air temperature set by operating the remote controller 46 and for driving the compressor 1 or the compressor 51, or both, and for controlling the operating frequencies of the compressors 1 and 51 (i.e., the output frequencies of the inverters 41 and 43)

The outdoor control section 40 comprises the following means (11) to (15) that serve to detect the amount of oil existing in the compressor 1 and also the amount of oil in the compressor 51:
(11) First detecting means for opening the two-way valve 32 at regular intervals set by an internal timer (for example, 5 minutes), each time for a predetermined period and for comparing the temperatures T1 and T2 detected by the temperature sensors 34 and 35, respectively, while the valve 32 remains open, thereby to detect the amount of oil existing in the sealed case 1c of the compressor 1.
(12) Second detecting means for opening the two-way valve 62 at regular intervals set by an internal timer (for example, 5 minutes), each time for a predetermined period and for comparing the temperatures T1 and T2 detected by the temperature sensors 64 and 65, respectively, while the valve 62 remains open, thereby to detect the amount of oil existing in the sealed case 51c of the compressor 51.
(13) Control means for opening the two-way valve 23 at regular intervals, each time for a predetermined period.
(14) Control means for opening the two-way valve 62 connected to the compressor 51 for a predetermined period, when the first detecting means detects that the amount of oil is insufficient (in the sealed case 1c).
(15) Control means for opening the two-way valve 32 connected to the compressor 1 for a predetermined period, when the second detecting means detects that the amount of oil is insufficient (in the sealed case 51c).

The means described in the paragraphs (11) and (12), and the oil pipes 31 and 61, two-way valves 32 and 62, capillary tubes 33 and 63 and temperature sensors 34, 35, 64 and 65, all described above, constitute a device for detecting the amount of oil. The amount of oil is detected the same way as in the first embodiment, from the temperatures that the sensors 34, 35, 64 and 65 have detected.

If the lubricating oil L is found to be insufficient in the compressor 1, the two-way valve 62 connected to the compressor 51 opens for the predetermined period. The excessive part of the lubricating oil L in the sealed case 51c of the compressor 51 therefore flows into the compressor 1 through the oil pipe 61 and the individual refrigerant-drawing pipe 18a. If the lubricating oil L is found to be insufficient in the compressor 51, the two-way valve 32 connected to the compressor 1 opens for the predetermined period. In this case, the excessive part of the lubricating oil L in the sealed case 1c of the compressor 1 flows into the compressor 51 through the oil pipe 31 and the individual refrigerant-drawing pipe 18b.

Thus, the amount of lubricating oil in the sealed case 1c and the mount of oil in the sealed case 51c can be detected with high reliability, without using mechanical floats switch such as the conventional oil-level adjusters of float-switch type and without the possibility of troubles or an increase in cost.

The two-way valves 32 and 62 remain open at the timing of detecting the amount of oil, for only a short time of about 30 to 90 seconds. The amount of oil can be quickly detected, avoiding unnecessary decrease in the performance of the compressors 1 and 51. Additionally, the detecting the amount of oil will not result in insufficiency of oil, no matter how many times it is repeated. This is because the lubricating oil L flows from the sealed case 1c or 51c into the oil pipe 31 or 61 during the detection, but flows back into the compressor 1 or 2 through the refrigerant-drawing pipe 18.

If the lubricating oil happens to be insufficient in one compressor, the excessive part of the lubricating oil in the other compressor is immediately supplied into the first-mentioned compressor through the oil pipe 31 or 61. Thus, a so-called "balanced tandem operation" can be accomplished. Moreover, the number of components required can be reduced, because either the oil pipe 31 or the oil pipe 61 is used in the balanced tandem operation, as an oil-balancing pipe, to balance the oil amount in one compressor with the oil amount in the other compressor. The reduction in the number of parts achieves a reduction in the manufacturing cost of the apparatus.

The remaining time t, upon lapse of which the lubricating oil will be insufficient, inferred on the basis of how the temperature difference ΔT changes, in the same way as in the first embodiment. When the remaining time t becomes too short in one compressor, the balanced tandem operation can be performed, quickly replenishing the compressor with the excessive part of the lubricating oil supplied from the other compressor via the oil tube 31 or the oil tube 61. This reliably prevents oil insufficiency in either compressor.

### [3] The third embodiment will be described.

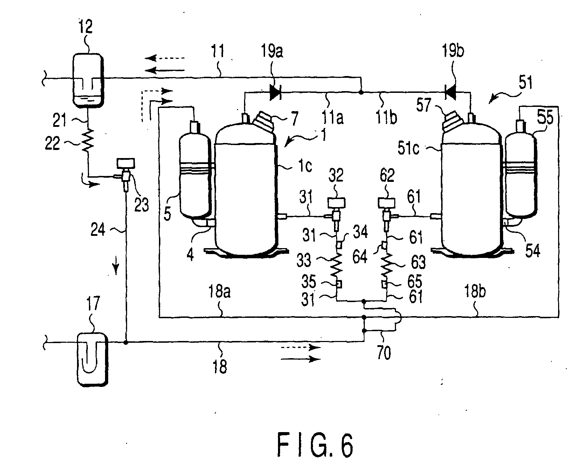

As FIG. 6 shows, a single pipe 70 is used in place of oil pipes 31 and 61. The pipe 70 is connected to a common refrigerant-drawing pipe 18. In any other structural aspects, the third embodiment is identical to the second embodiment. Further, it operates in the same way as the second embodiment.

### [4] The fourth embodiment will be described.

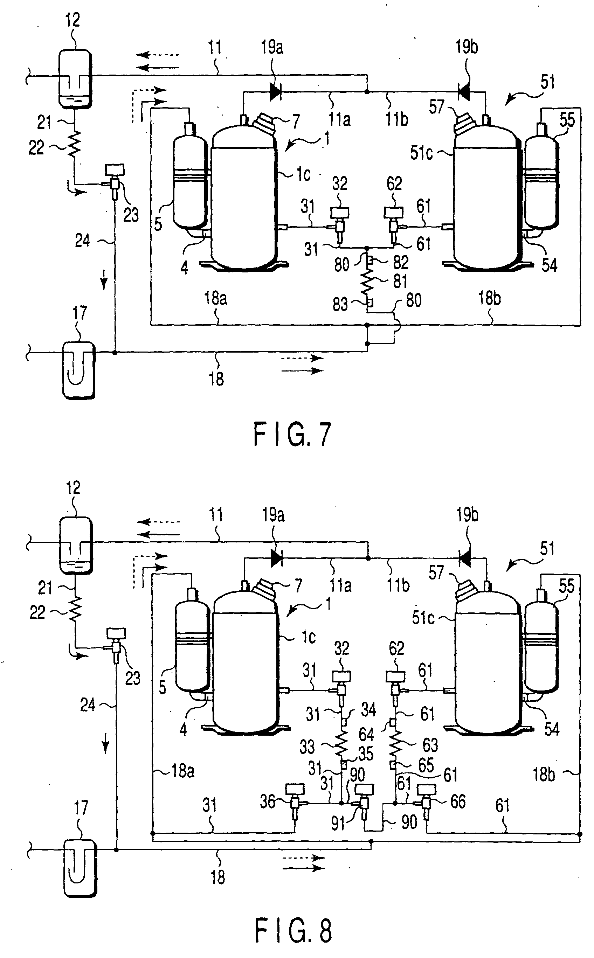

As FIG. 7 illustrates, oil pipes 31 and 61 (i.e., first oil pipes) are connected at one end to the sealed cases 1c and 51c, respectively, at a level that is appropriate for the lubricating oil L in the sealed cases 1c and 51c. The oil pipes 31 and 61 are connected to each other at the other end. Two-way valves 32 and 62 are provided on the oil pipes 31 and 61, respectively. An oil pipe 80 (i.e., second oil pipe) extends between the junction between of the oil pipes 31 and 61 and a common refrigerant-drawing pipe 18.

A pressure reducing unit, such as a capillary tube 81, is provided on the oil pipe 80. A first temperature sensor 82 and a second temperature sensor 83 are provided on the oil pipe 80, respectively upstream and downstream of the capillary tube 81.

If the surface of the lubricating oil L in the sealed case 1c has reached the appropriate level, the oil L flows from the sealed case 1c into the oil pipe 31 when the two-way valve 32 is opened. The oil L then flows into the refrigerant-drawing pipe 18 through the two-way valve 32, oil pipe 80 and capillary tube 81. If the surface of the lubricating oil L in the sealed case 1c has not reached the appropriate level, the gas refrigerant flows from the sealed case 1c into the oil pipe 31 when the two-way valve 32 is opened. The gas refrigerant then flows into the common refrigerant-drawing pipe 18 through the two-way valve 32, oil pipe 80 and capillary tube 81.

If the surface of the lubricating oil L in the sealed case 51c has reached the appropriate level, the oil L flows from the sealed case 51c into the oil pipe 61 when the two-way valve 62 is opened. The oil L then flows into the refrigerant-drawing pipe 18 through the two-way valve 62, oil pipe 80 and capillary tube 81. If the surface of the lubricating oil L in the sealed case 51c has not reached the appropriate level, the gas refrigerant flows from the sealed case 51c into the oil pipe 61 when the two-way valve 62 is opened. The gas refrigerant then flows into the common refrigerant-drawing pipe 18 through the two-way valve 62, oil pipe 80 and capillary tube 81.

The outdoor control section 40 comprises the following means (11) to (15) that serve to detect the amount of oil existing in the compressor 1 and also the amount of oil in the compressor 51:
(11) First detecting means for opening the two-way valve 32 at regular intervals set by an internal timer (for example, 5 minutes), each time for a predetermined period and for comparing the temperatures T1 and T2 detected by the temperature sensors 82 and 83, respectively, while the valve 32 remains open, thereby to detect the amount of oil existing in the sealed case 1c of the compressor 1.
(12) Second detecting means for opening the two-way valve 62 at regular intervals set by an internal timer (for example, 5 minutes), each time for a predetermined period and for comparing the temperatures T1 and T2 detected by the temperature sensors 82 and 83, respectively, while the valve 62 remains open, thereby to detect the amount of oil existing in the sealed case 51c of the compressor 51.
(13) Control means for opening the two-way valve 23 at regular intervals, each time for a predetermined period.
(14) Control means for opening the two-way valve 62 connected to the compressor 51, for a predetermined period when the first detecting means detects that the amount of oil is insufficient (in the sealed case 1c).
(15) Control means for opening the two-way valve 32 connected to the compressor 1 for a predetermined period, when the second detecting means detects that the amount of oil is insufficient (in the sealed case 51c).

The means described in the paragraphs (11) and (12), and the oil pipes 31, 61 and 80, two-way valves 32 and 62, capillary tubes 81 and temperature sensors 82 and 83, all described above, constitute a device for detecting the amount of oil. The amount of oil is detected the same way as in the first embodiment, from the temperatures that the sensors 82 and 83 have detected.

If the lubricating oil L is found to be insufficient in the compressor 1, the two-way valve 62 connected to the compressor 51 opens for the predetermined period. The excessive part of the lubricating oil L in the sealed case 51c of the compressor 1 therefore flows into the compressor 1 through the oil pipes 61 and 80 and the individual refrigerant-drawing pipe 18a. If the lubricating oil L is found to be insufficient in the compressor 51, the two-way valve 32 connected to the compressor 1 open for the predetermined period. In this case, the excessive part of the lubricating oil L in the sealed case 1c of the compressor 1 flows into the compressor 51 through the oil pipes 31 and 80 and the individual refrigerant-drawing pipe 18b.

Thus, the amount of the lubricating oil present in the sealed case 1c of the compressor 1 and the amount of lubricating oil present in the sealed case 51c of the compressor 51 can be detected reliably and correctly, without using mechanical floats switch such as the conventional oil-level adjusters of float-switch type and without the possibility of troubles or an increase in cost.

The two-way valves 32 and 62 remain open at the timing of detecting the amount of oil, for only a short time of about 30 to 90 seconds. The amount of oil can be quickly detected, avoiding unnecessary decrease in the performance of the compressors 1 and 51. Further, the detecting the amount of oil will not result in insufficiency of oil, no matter how many times it is repeated. This is because the lubricating oil L flows from the sealed case 1c or 51c into the oil pipe 31 or 61 during the detection, but flows back into the compressor 1 or 51 through the refrigerant-drawing pipe 18.

If the lubricating oil happens to be insufficient in one compressor, the excessive part of the lubricating oil in the other compressor is immediately supplied into the first-mentioned compressor through the oil pipe 31 or 61. Thus, a so-called "balanced tandem operation" can be accomplished to replenish lubricating oil fast. Further, the number of components required can be reduced, because either the oil pipe 31 or the oil pipe 61 is used in the balanced tandem operation to balance the oil amount in one compressor with the oil amount in the other compressor. The reduction in the number of parts achieves a reduction in the manufacturing cost of the apparatus.

The remaining time t, upon lapse of which the lubricating oil will be insufficient, is inferred on the basis of how the temperature difference ΔT changes, in the same way as in the first embodiment. When the remaining time t becomes too short in one compressor, the balanced tandem operation can be performed, quickly replenishing the compressor with the excessive part of the lubricating oil supplied from the other compressor via the oil tube 31 or 61 and the oil pipe 80. This reliably prevents oil insufficiency in either compressor.

In any other structural aspects, the fourth embodiment is identical to the second embodiment. Further, it operates in the same way as the second embodiment.

### [5] The fifth embodiment will be described.

As FIG. 8 depicts, an oil pipe 31 is connected to a sealed case 1c and an individual refrigerant-drawing pipe 18a, and an oil pipe 61 is connected to a sealed case 51c and an individual refrigerant-drawing pipe 18b. The oil pipes 31 and 61 are connected to the sealed cases 1c and 51c, respectively, at a level that is appropriate for the lubricating oil L in the sealed cases 1c and 51c.

A pressure reduce unit, such as a capillary tube 33, is provided on the oil pipe 31. A pressure reduce unit, such as a capillary tube 63, is provided on the oil pipe 61. Two-way valves 31 and 62 (first two-way valves) are provided at upstream of the capillary tubes 33 and 63, respectively. Further, two-way valves 36 and 66 (second two-way valves) are provided at downstream of the capillary tubes 33 and 63, respectively. An oil-flow pipe 90 is connected to the junction between the capillary tube 33 and two-way valve 36, both provided on the oil pipe 31, and to the junction between the capillary tube 63 and two-way valve 66, both provided on the oil pipe 61. A two-way valve 91 (third two-way valve) is provided on the oil-flow pipe 90.

First temperature sensors 34 and 64 are fixed to the oil pipes 31 and 61, one at the junction between the switch 32 and the capillary tube 33, and the other at the junction between the switch 62 and the capillary tube 63. Second temperature sensors 35 and 65 are fixed to the oil pipes 31 and 61, one at the junction between the capillary tube 33 and the two-way valve 36, and the other at the junction between the capillary tube 66 and the two-way valve 66.

If the surface of the lubricating oil L in the sealed case 1c has reached the appropriate level, the oil L flows from the sealed case 1c into the oil pipe 31 when the two-way valves 32 and 36 are opened. The oil L then flows into the individual refrigerant-drawing pipe 18a through the two-way valves 32 and 36 and capillary tube 33. If the surface of the lubricating oil L in the sealed case 1c has not reached the appropriate level, the gas refrigerant flows from the sealed case 1c into the oil pipe 31 when the two-way valves 32 and 36 are opened. The gas refrigerant then flows into the individual refrigerant-drawing pipe 18a through the two-way valves 32 and 36 and capillary tube 33.

If the surface of the lubricating oil L in the sealed case 51c has reached the appropriate level, the oil L flows from the sealed case 51c into the oil pipe 61 when the two-way valves 62 and 66 are opened. The oil L then flows into the individual refrigerant-drawing pipe 18b through the two-way valves 62 and 66 and capillary tube 63. If the surface of the lubricating oil L in the sealed case 51c has not reached the appropriate level, the gas refrigerant flows from the sealed case 51c into the oil pipe 61 when the two-way valves 62 and 66 are opened. The gas refrigerant then flows into the individual refrigerant-drawing pipe 18a through the two-way valves 62 and 66 and capillary tube 63.

The outdoor control section 40 comprises the following means (11) to (15) that serve to detect the amount of oil existing in the compressor 1 and also the amount of oil in the compressor 51:
(11) First detecting means for opening the two-way valves 32 and 36 at regular intervals set by an internal timer (for example, 5 minutes), each time for a predetermined period and for comparing the temperatures T1 and T2 detected by the temperature sensors 34 and 835, respectively, while the valves 32 and 36 remain open, thereby to detect the amount of oil existing in the sealed case 1c of the compressor 1.
(12) Second detecting means for opening the two-way valves 62 and 66 at regular intervals set by an internal timer (for example, 5 minutes), each time for a predetermined period and for comparing the temperatures T1 and T2 detected by the temperature sensors 64 and 65, respectively, while the valves 62 and 66 remain open, thereby to detect the amount of oil existing in the sealed case 51c of the compressor 51.
(13) Control means for opening the two-way valve 23 at regular intervals, each time for a predetermined period.
(14) Control means for opening the two-way valve 62 connected to the compressor 51, the two-way valve 91 provided on the oil-flow pipe 90 and the two-way valve 36 connected to the compressor 1 for a predetermined period when the first detecting means detects that the amount of oil is insufficient (in the sealed case 1c).
(15) Control means for opening the two-way valve 32 connected to the compressor 1, the two-way valve 91 provided on the oil-flow pipe 90 and the two-way valve 36 connected to the compressor 1 for a predetermined period, when the second detecting means detects that the amount of oil is insufficient (in the sealed case 51c).

The means described in the paragraphs (11) and (12), and the oil pipes 31 and 61, two-way valves 32. 36, 62 and 66, capillary tubes 33 and 63 and temperature sensors 34, 35, 64 and 65 constitute a device for detecting the amount of oil. The amount of oil is detected the same way as in the first embodiment, from the temperatures that the sensors 34, 35, 64 and 65 have detected.

If the lubricating oil L is found to be insufficient in the compressor 1, the two-way valve 62 connected to the compressor 51, the two-way valve 91 provided on the oil-flow pipe 90 and the two-way valve 36 connected to the compressor 1 open for the predetermined period. The excessive part of the lubricating oil L in the sealed case 51c of the compressor 1 therefore flows into the compressor 1 through the oil pipe 61, oil-flow pipe 90 and oil pipe 31 and individual refrigerant-drawing pipe 18a. If the lubricating oil L is found to be insufficient in the compressor 51, the two-way valve 32 connected to the compressor 1, the two-way valve 91 provided on the oil-flow pipe 90 and the two-way valve 66 connected to the compressor 51 open for the predetermined period. In this case, the excessive part of the lubricating oil L in the sealed case 1c of the compressor 1 flows into the compressor 51 through the oil pipe 31, oil-flow pipe 90, oil pipe 61 and individual refrigerant-drawing pipe 18b.

Thus, the amount of the lubricating oil present in the sealed case 1c of the compressor 1 and the amount of lubricating oil present in the sealed case 51c of the compressor 51 can be detected reliably and correctly, without using mechanical floats switch such as the conventional oil-level adjusters of float-switch type and without the possibility of troubles or an increase in cost.

The two-way valves 32, 36, 62 and 66 remain open at the timing of detecting the amount of oil, for only a short time of about 30 to 90 seconds. The amount of oil can be quickly detected, avoiding unnecessary decrease in the performance of the compressors. Further, the detecting the amount of oil will not result in insufficiency of oil, no matter how many times it is repeated. This is because the lubricating oil L flows from the sealed case 1c and 51c into the oil pipe 31 and 61 during the detection, but flows back into the compressors 1 and 51 through the individual refrigerant-drawing pipes 18a and 18b, respectively.

If the lubricating oil happens to be insufficient in one compressor, the excessive part of the lubricating oil in the other compressor is immediately supplied into the first-mentioned compressor through the oil pipes 31 and 61 and the oil-flow pipe 90. Thus, a so-called "balanced tandem operation" can be accomplished to replenish lubricating oil fast. Additionally, the number of components required can be reduced, because the oil pipe 31 and the oil pipe 61 are used as oil-flow pipes in the balanced tandem operation. The reduction in the number of parts achieves a reduction in the manufacturing cost of the apparatus.

The remaining time t, upon lapse of which the lubricating oil will be insufficient, is inferred on the basis of how the temperature difference ΔT changes, in the same way as in the first embodiment. When the remaining time t becomes too short in one compressor, the balanced tandem operation can be performed, quickly replenishing the compressor with the excessive part of the lubricating oil supplied from the other compressor via the oil tubes 31 and 61 and the oil-flow pipe 90. This reliably prevents oil insufficiency in either compressor.

In any other structural aspects, the fifth embodiment is identical to the second embodiment. Further, it operates in the same way as the second embodiment.

### [6] The sixth embodiment will be described below.

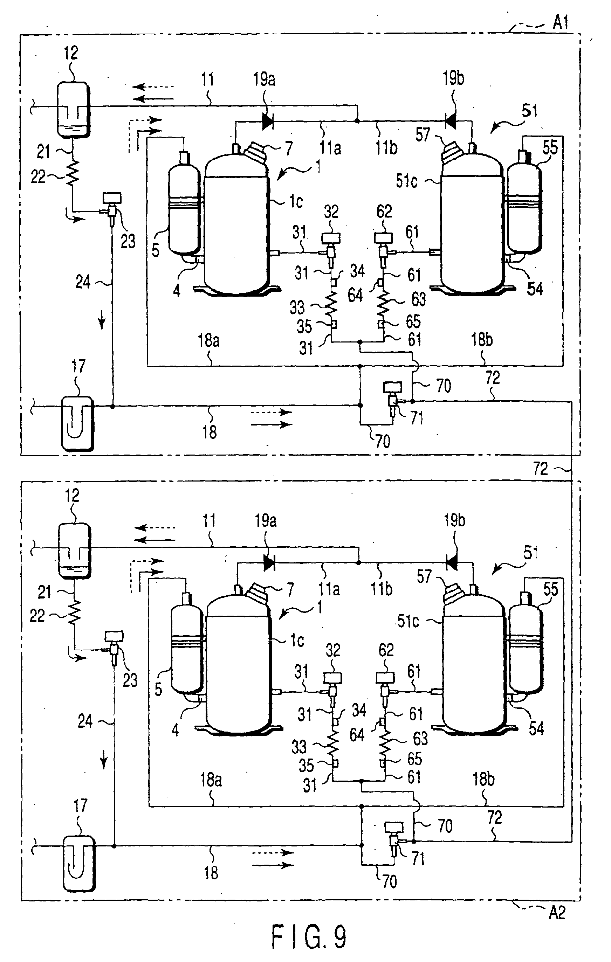

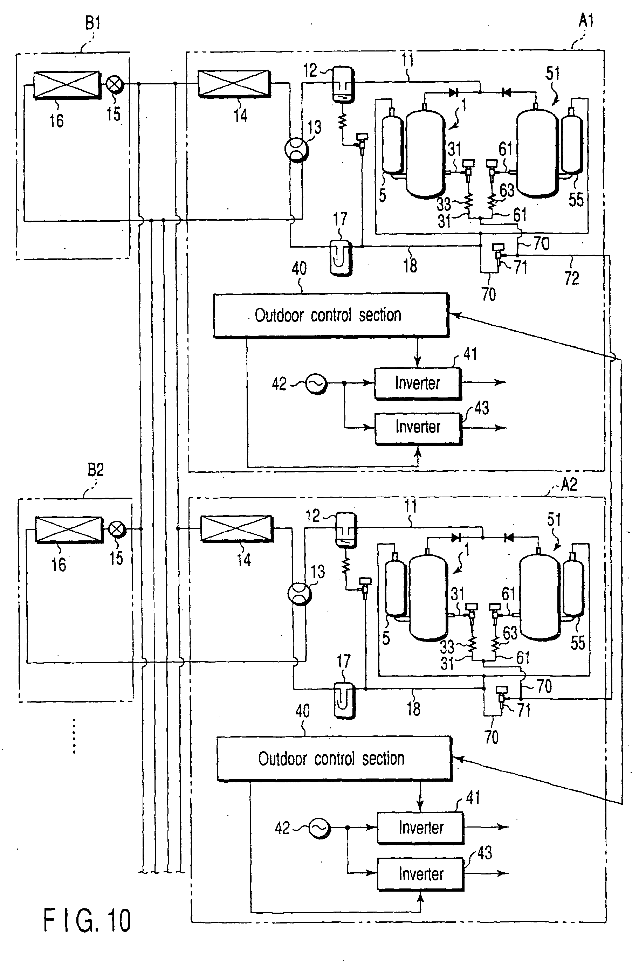

As FIGS. 9 and 10 show, outdoor units A1, A2 ··· are connected by refrigerant pipes, and indoor units B1, B2 ··· are connected to the outdoor units A1, A2 ··· by refrigerant pipes. Thus, a multi-type refrigerating cycle is constituted.

The outdoor unit A1 comprises compressors 1 and 51 that are connected by refrigerant pipes. Similarly, the outdoor unit A2 comprises compressors 1 and 51 connected by refrigerant pipes.

The outdoor units A1 and A2 have an oil-amount detecting device each. The devices are of the type shown in FIG. 6 that illustrates the third embodiment. They will not be described in detail.

A two-way valve 71 is provided on the oil pipe 70 of the outdoor unit A1. Similarly, a two-way valve 71 is provided on the oil pipe 70 of the outdoor unit A2. The oil pipes 70 are connected by an oil-flow pipe 72, at the parts that are at upstream of the oil pipes 70.

The outdoor units A1 and A2 have an outdoor control section 40 each. The outdoor control sections 40 can exchange data.

Each outdoor control section 40 comprises the following means (11) to (15) that serve to detect the amount of oil existing in the compressor 1 and also the amount of oil in the compressor 51:
(11) First detecting means for opening the two-way valves 32 and 71 at regular intervals set by an internal timer (for example, 5 minutes), each time for a predetermined period and for comparing the temperatures T1 and T2 detected by the temperature sensors 34 and 35, respectively, while the valves 32 and 71 remain open, thereby to detect the amount of oil existing in the sealed case 1c of the compressor 1.
(12) Second detecting means for opening the two-way valves 62 and 71 at regular intervals set by an internal timer (for example, 5 minutes), each time for a predetermined period and for comparing the temperatures T1 and T2 detected by the temperature sensors 64 and 65, respectively, while the valves 62 and 71 remain open, thereby to detect the amount of oil existing in the sealed case 51c of the compressor 51.
(13) Control means for opening the two-way valve 23 at regular intervals, each time for a predetermined period.
(14) Control means for opening the two-way valve 71 of the outdoor unit A1 for a predetermined period, with the two-way valves 32 and 62 of the unit A1 closed, and opening the two-way valves 32 and 62 of the outdoor unit A2, with the two-way valve 71 of the unit A2 closed, when oil is found to be insufficient in the compressor 1 or 51 provided in the outdoor unit A1.
(15) Control means for opening the two-way valve 71 of the outdoor unit A2 for a predetermined period, with the two-way valves 32 and 62 of the unit A2 closed, and opening the two-way valves 32 and 62 of the outdoor unit A1, with the two-way valve 71 of the unit A1 closed, when oil is found to be insufficient in the compressor 1 or 51 provided in the outdoor unit A2.

The amount of lubricating oil is detected from the temperatures detected by the temperature sensors 34, 35, 64 and 65, in the same way as in the first embodiment.

If the lubricating oil L is found to be insufficient in the compressor 1 or 51 of the outdoor unit A1, the two-way valve 71 of the outdoor unit A1 opens, with the two-way valves 32 and 62 of the outdoor unit A1 closed, and the two-way valves 32 and 62 of the outdoor unit A2 open, with the two-way valve 71 of the outdoor unit A2 closed. The excessive part of the lubricating oil L in the compressors 1 and 51 of the outdoor unit A2 therefore flows into the outdoor unit A1 through the oil pipes 31, 61 and 70 and oil-flow pipe 72 of the outdoor unit A2. In the outdoor unit A1, the lubricating oil L is drawn into the compressors 1 and 51 via the two-way valve 71, oil pipe 70 and the individual refrigerant-drawing pipes 18a and 18b that remain open.

If the lubricating oil L is found to be insufficient in the compressor 1 or 51 of the outdoor unit A2, the two-way valve 71 of the outdoor unit A2 opens, with the two-way valves 32 and 62 of the outdoor unit A2 closed, and the two-way valves 32 and 62 of the outdoor unit A1 open, with the two-way valve 71 of the outdoor unit A1 closed. The excessive part of the lubricating oil L in the compressors 1 and 51 of the outdoor unit A1 therefore flows into the outdoor unit A2 through the oil pipes 31, 61 and 70 and oil-flow pipe 72 of the outdoor unit A2. In the outdoor unit A2, the lubricating oil L is drawn into the compressors 1 and 51 via the two-way valve 71, oil pipe 70 and individual refrigerant-drawing pipes 18a and 18b that remain open.

Thus, the amount of the lubricating oil present in the sealed case 1c of the compressor 1 and the amount of lubricating oil present in the sealed case 51c of the compressor 51 can be detected reliably and correctly, without using mechanical floats switch such as the conventional oil-level adjusters of float-switch type and without the possibility of troubles or an increase in cost.

The two-way valves 32 and 62 remain open at the timing of detecting the amount of oil, for only a short time of about 30 to 90 seconds. The amount of oil can be quickly detected, avoiding unnecessary decrease in the performance of the compressors. In addition, the detecting the amount of oil will not result in insufficiency of oil, no matter how many times it is repeated. This is because the lubricating oil L flows from the sealed cases 1c and 51c into the oil pipe 31 and 61, respectively, during the detection, but flows back into the compressors 1 and 51 through the common refrigerant-drawing pipes 18.

If the lubricating oil happens to be insufficient in the compressor 1 or 51 of one outdoor unit, the excessive part of the lubricating oil in the compressors of the other outdoor unit is immediately supplied into the first-mentioned outdoor unit through the oil pipes 31, 61 and 70 and the oil-flow pipe 72. Thus, a so-called "balanced tandem operation" can be accomplished to replenish lubricating oil fast. Further, the number of components required can be reduced, because the oil pipe 31, 61 and 70 are used as oil-flow pipes in the balanced tandem operation. The reduction in the number of parts achieves a reduction in the manufacturing cost of the apparatus.

In any other structural aspects, the sixth embodiment is identical to the second embodiment. Further, it operates in the same way as the second embodiment.

### [7] The seventh embodiment will be described below.

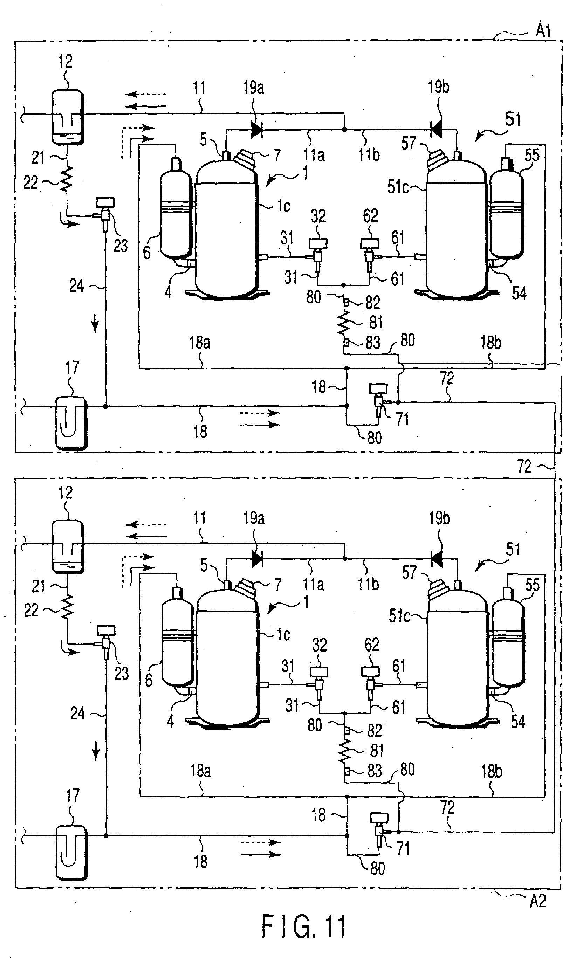

As FIG. 11 shows, outdoor units A1, A2 ··· are connected by refrigerant pipes, and indoor units B1, B2 ··· are connected to the outdoor units A1, A2 ··· by refrigerant pipes. Thus, a multi-type refrigerating cycle is constituted.

The outdoor unit A1 comprises compressors 1 and 51 that are connected by refrigerant pipes. Similarly, the outdoor unit A2 comprises compressors 1 and 51 connected by refrigerant pipes.

The outdoor units A1 and A2 have an oil-amount detecting device each. The devices are of the type shown in FIG. 7 that illustrates the fourth embodiment. They will not be described in detail.

A two-way valve 71 is provided on the oil pipe 80 of the outdoor unit A1. Similarly, a two-way valve 71 is provided on the oil pipe 80 of the outdoor unit A2. The oil pipes 80 are connected by an oil-flow pipe 72, at the parts that are at upstream of the two-way valve 71.

The outdoor units A1 and A2 have an outdoor control section 40 each, as in the sixth embodiment illustrated in FIG. 10. The outdoor control sections 40 can exchange data.

Each outdoor control section 40 comprises the following means (11) to (15) that serve to detect the amount of oil existing in the compressor 1 and also the amount of oil in the compressor 51:
(11) First detecting means for opening the two-way valves 32 and 71 at regular intervals set by an internal timer (for example, 5 minutes), each time for a predetermined period and for comparing the temperatures T1 and T2 detected by the temperature sensors 82 and 83, respectively, while the valves 32 and 71 remain open, thereby to detect the amount of oil existing in the sealed case 1c of the compressor 1.
(12) Second detecting means for opening the two-way valves 62 and 71 at regular intervals set by an internal timer (for example, 5 minutes), each time for a predetermined period and for comparing the temperatures T1 and T2 detected by the temperature sensors 82 and 83, respectively, while the valves 62 and 71 remain open, thereby to detect the amount of oil existing in the sealed case 51c of the compressor 51.
(13) Control means for opening the two-way valve 23 at regular intervals, each time for a predetermined period.
(14) Control means for opening the two-way valve 71 of the outdoor unit A1 for a predetermined period, with the two-way valves 32 and 62 of the unit A1 closed, and opening the two-way valves 32 and 62 of the outdoor unit A2, with the two-way valve 71 of the unit A2 closed, when oil is found to be insufficient in the compressor 1 or 51 provided in the outdoor unit A1.
(15) Control means for opening the two-way valve 71 of the outdoor unit A2 for a predetermined period, with the two-way valves 32 and 62 of the unit A2 closed, and opening the two-way valves 32 and 62 of the outdoor unit A1, with the two-way valve 71 of the unit A1 closed, when oil is found to be insufficient in the compressor 1 or 51 provided in the outdoor unit A2.

The amount of lubricating oil is detected from the temperatures detected by the temperature sensors 82 and 83, in the same way as in the first embodiment.

If the lubricating oil L is found to be insufficient in the compressor 1 or 51 of the outdoor unit A1, the two-way valve 71 of the outdoor unit A1 opens, with the two-way valves 32 and 62 of the outdoor unit A1 closed, and the two-way valves 32 and 62 of the outdoor unit A2 open, with the two-way valve 71 of the outdoor unit A2 closed. The excessive part of the lubricating oil L in the compressors 1 and 51 of the outdoor unit A2 therefore flows into the outdoor unit A1 through the oil pipes 31, 61 and 70 and oil-flow pipe 72 of the outdoor unit A2. In the outdoor unit A1, the lubricating oil L is drawn into the compressors 1 and 51 via the two-way valve 71, oil pipe 70 and the individual refrigerant-drawing pipes 18a and 18b that remain open.

If the lubricating oil L is found to be insufficient in the compressor 1 or 51 of the outdoor unit A2, the two-way valve 71 of the outdoor unit A2 opens, with the two-way valves 32 and 62 of the outdoor unit A2 closed, and the two-way valves 32 and 62 of the outdoor unit A1 open, with the two-way valve 71 of the outdoor unit A1 closed. The excessive part of the lubricating oil L in the compressors 1 and 51 of the outdoor unit A1 therefore flows into the outdoor unit A2 through the oil pipes 31, 61 and oil-flow pipe 72 of the outdoor unit A2 and the oil-flow pipe 72. In the outdoor unit A2, the lubricating oil L is drawn into the compressors 1 and 51 via the two-way valve 71, oil pipe 70 and individual refrigerant-drawing pipes 18a and 18b that remain open.

Thus, the amount of the lubricating oil present in the sealed case 1c of the compressor 1 and the amount of lubricating oil present in the sealed case 51c of the compressor 51 can be detected reliably and correctly, without using mechanical floats switch such as the conventional oil-level adjusters of float-switch type and without the possibility of troubles or an increase in cost.

The two-way valves 32 and 62 remain open at the timing of detecting the amount of oil, for only a short time of about 30 to 90 seconds. The amount of oil can be quickly detected, avoiding unnecessary decrease in the performance of the compressors. In addition, the detecting the amount of oil will not result in insufficiency of oil, no matter how many times it is repeated. This is because the lubricating oil L flows from the sealed cases 1c and 51c into the oil pipe 31 and 61, respectively, during the detection, but flows back into the compressors 1 and 51 through the common refrigerant-drawing pipes 18.

If the lubricating oil happens to be insufficient in the compressor 1 or 51 of one outdoor unit, the excessive part of the lubricating oil in the compressors of the other outdoor unit is immediately supplied into the first-mentioned outdoor unit through the oil pipes 31, 61 and 80 and the oil-flow pipe 72. Thus, a so-called "balanced tandem operation" can be accomplished to replenish lubricating oil fast. Further, the number of components required can be reduced, because the oil pipe 31, 61 and 80 are used as oil-flow pipes in the balanced tandem operation. The reduction in the number of parts achieves a reduction in the manufacturing cost of the apparatus.

In any other structural aspects, the seventh embodiment is identical to the second embodiment. Moreover, it operates in the same way as the second embodiment.

### [8] The eighth embodiment will be described below.

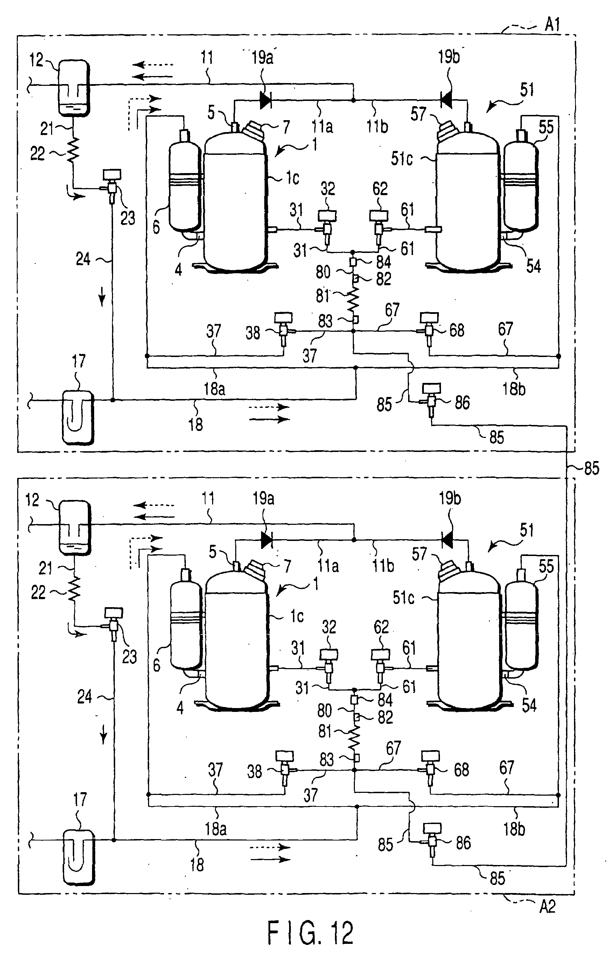

As FIG. 12 depicts, outdoor units A1, A2 ··· are connected by refrigerant pipes. Indoor units B1, B2 ··· are connected to the outdoor units A1, A2 ··· by refrigerant pipes as is illustrated in FIG. 10.
Thus, a multi-type refrigerating cycle is constituted.

The outdoor unit A1 comprises compressors 1 and 51 that are connected by refrigerant pipes. Similarly, the outdoor unit A2 comprises compressors 1 and 51 connected by refrigerant pipes.

Oil pipes 31 and 61 (first oil pipes) are connected at one end to the sealed cases 1c and 51c, respectively, at a level that is appropriate for the lubricating oil L in the sealed cases 1c and 51c. The oil pipes 31 and 61 are connected to each other at the other end. An oil pipe 80 (second oil pipe) is connected at one end to the junction between of the oil pipes 31 and 61. Oil pipes 37 and 67 (third oil pipes) are connected at one end to the other end of the oil pipe 80, and at the other end to individual refrigerant-drawing pipes 18a and 18b, respectively. Two-way valves 38 and 68 are provided on the oil pipes 37 and 67, respectively.

A pressure reduce unit, such as a capillary tube 81, is provided on the oil pipe 80. A first temperature sensor 82 and a second temperature sensor 83 are provided on the oil pipe 80, respectively upstream and downstream of the capillary tube 81.

The oil pipe 80 of the outdoor unit A1 and the oil pipe 80 of the outdoor unit A2 are connected to each other by an oil-flow pipe 85, at downstream of the capillary tube 81. A two-way valve 86 (third two-way valve) is provided on the oil-flow pipe 85 incorporated in the outdoor unit A1. Likewise, a two-way valve 86 (third two-way valve) is provided on the oil-flow pipe 85 incorporated in the outdoor unit A2.

The outdoor units A1 and A2 have an outdoor control section 40 each, as in the sixth embodiment illustrated in FIG. 10. The outdoor control sections 40 can exchange data.

Each outdoor control section 40 comprises the following means (11) to (15) that serve to detect the amount of oil existing in the compressor 1 and also the amount of oil in the compressor 51:
(11) First detecting means for opening the two-way valves 32 and 38 at regular intervals set by an internal timer (for example, 5 minutes), each time for a predetermined period and for comparing the temperatures T1 and T2 detected by the temperature sensors 82 and 83, respectively, while the valves 32 and 38 remain open, thereby to detect the amount of oil existing in the sealed case 1c of the compressor 1.
(12) Second detecting means for opening the two-way valves 62 and 68 at regular intervals set by an internal timer (for example, 5 minutes), each time for a predetermined period and for comparing the temperatures T1 and T2 detected by the temperature sensors 82 and 83, respectively, while the valves 62 and 68 remain open, thereby to detect the amount of oil existing in the sealed case 51c of the compressor 51.
(13) Control means for opening the two-way valve 23 at regular intervals, each time for a predetermined period.
(14) Control means for opening the two-way valves 38, 68 and 86 of the outdoor unit A1 for a predetermined period, with the two-way valves 32 and 62 of the unit A1 closed, and opening the two-way valves 32, 62 and 86 of the outdoor unit A2, with the two-way valve 38 and 68 of the unit A2 closed, when oil is found to be insufficient in the compressor 1 or 51 provided in the outdoor unit A1.
(15) Control means for opening the two-way valve 38, 68 and 86 of the outdoor unit A2 for a predetermined period, with the two-way valves 32 and 62 of the unit A2 closed, and opening the two-way valves 32, 62 and 86 of the outdoor unit A1, with the two-way valve 38 and 68 of the unit A1 closed, when oil is found to be insufficient in the compressor 1 or 51 provided in the outdoor unit A2.

The amount of lubricating oil is detected from the temperatures detected by the temperature sensors 82 and 83, in the same way as in the first embodiment.

If the lubricating oil L is found to be insufficient in the compressor 1 or 51 of the outdoor unit A1, the two-way valves 38, 68 and 86 of the outdoor unit A1 open, with the two-way valves 32 and 62 of the outdoor unit A1 closed, and the two-way valves 32, 62 and 86 of the outdoor unit A2 open, with the two-way valves 38 and 68 of the outdoor unit A2 closed. The excessive part of the lubricating oil L in the compressors 1 and 51 of the outdoor unit A2 therefore flows into the outdoor unit A1 through the oil pipes 31, 61 and 80 of the outdoor unit A2 and the oil-flow pipe 85. In the outdoor unit A1, the lubricating oil L is drawn into the compressors 1 and 51 via the two-way valves 86, oil pipes 37 and 67 and individual refrigerant-drawing pipes 18a and 18b that remain open.

If the lubricating oil L is found to be insufficient in the compressor 1 or 51 of the outdoor unit A2, the two-way valves 38, 68 and 86 of the outdoor unit A2 open, with the two-way valves 32 and 62 of the outdoor unit A2 closed, and the two-way valves 32, 62 and 86 of the outdoor unit A2 open, with the two-way valves 38 and 68 of the outdoor unit A1 closed. The excessive part of the lubricating oil L in the compressors 1 and 51 of the outdoor unit A1 therefore flows into the outdoor unit A2 through the oil pipes 31 and 61 and oil-flow pipe 80 of the outdoor unit A1 and the oil-flow pipe 85. In the outdoor unit A2, the lubricating oil L is drawn into the compressors 1 and 51 via the two-way valves 86, oil pipes 37 and 67 and individual refrigerant-drawing pipes 18a and 18b that remain open.

Thus, the amount of the lubricating oil present in the sealed case 1c of the compressor 1 and the amount of lubricating oil present in the sealed case 51c of the compressor 51 can be detected reliably and correctly, without using mechanical floats switch such as the conventional oil-level adjusters of float-switch type and without the possibility of troubles or an increase in cost.

The two-way valves 32, 62, 38 and 68 remain open at the timing of detecting the amount of oil, for only a short time of about 30 to 90 seconds. The amount of oil can be quickly detected, avoiding unnecessary decrease in the performance of the compressors. In addition, the detecting the amount of oil will not result in insufficiency of oil, no matter how many times it is repeated. This is because the lubricating oil L flows from the sealed cases 1c and 51c into the oil pipe 31 and 61, respectively, during the detection, but flows back into the compressors 1 and 51 through the individual refrigerant-drawing pipes 18a and 19b, respectively.

If the lubricating oil happens to be insufficient in the compressor 1 or 51 of one outdoor unit, the excessive part of the lubricating oil in the other outdoor unit is immediately supplied into the first-mentioned outdoor unit through the oil pipes 31, 61 and 80 and the oil-flow pipe 85. Thus, a so-called balanced tandem operation can be performed to replenish lubricating oil fast. In addition, the number of components required can be reduced, because the oil pipe 31, 61 and 80 are used as oil-flow pipes in the balanced tandem operation. The reduction in the number of parts achieves a reduction in the manufacturing cost of the apparatus.

In any other structural aspects, the eighth embodiment is identical to the second embodiment. Moreover, it operates in the same way as the second embodiment.

### [9] The ninth embodiment will be described.

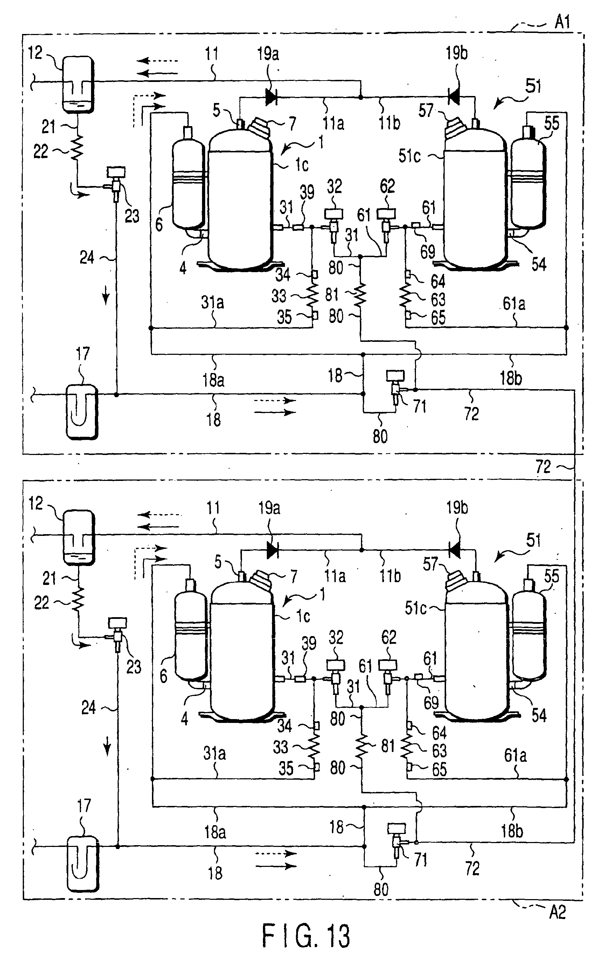

As FIG. 13 shows, outdoor units A1, A2 ··· are connected by refrigerant pipes. Indoor units B1, B2 ··· are connected to the outdoor units A1, A2 ··· by refrigerant pipes as is illustrated in FIG. 10.
Thus, a multi-type refrigerating cycle is constituted.

The outdoor unit A1 comprises compressors 1 and 51 that are connected by refrigerant pipes. Similarly, the outdoor unit A2 comprises compressors 1 and 51 connected by refrigerant pipes.

Oil pipes 31 and 61 (first oil pipes) are connected at one end to the sealed cases 1c and 51c, respectively, at a level that is appropriate for the lubricating oil L in the sealed cases 1c and 51c. Two-way valves 32 and 62 (first two-way valves) are provided on the oil pipes 31 and 61, respectively. The oil pipes 31 and 61 are connected to each other at the other end. An oil pipe 80 (second oil pipe) is connected at one end to the junction between of the oil pipes 31 and 61. The other end of the oil pipe 80 is connected a common refrigerant-drawing pipe 18.

Oil pipes 31a and 61a are connected at one end to the oil pipes 31 and 61, respectively at upstream of the two-way valves 32 and 62. The oil pipes 31a and 61b are connected at the other end to individual refrigerant-drawing pipes 18a and 18b, respectively. Pressure reducing units 33 and 63 are provided on the oil pipes 31a and 61a, respectively.

First temperature sensors 34 and 64 are attached to the oil pipes 31a and 61a, respectively, at upstream of the pressure reducing units 33 and 63. Second temperature sensors 35 and 65 are attached to the oil pipes 31a and 61a, respectively, at downstream of the pressure reducing units 33 and 63.

A capillary tube 81 and a two-way valve 71 (second two-way valve) are provided on the oil pipe 80. The oil pipes 80 of the outdoor units A1 and A2 are connected by an oil-flow pipe 72, each at that part that lies upstream of the two-way valve 71.

The outdoor units A1 and A2 have an outdoor control section 40 each, as in the sixth embodiment illustrated in FIG. 10. The outdoor control sections 40 can exchange data.

Each outdoor control section 40 comprises the following means (11) to (15) that serve to detect the amount of oil existing in the compressor 1 and also the amount of oil in the compressor 51:
(11) First detecting means for comparing the temperatures T1 and T2 detected by the temperature sensors 34 and 35, respectively, to detect the amount of oil existing in the sealed case 1c of the compressor 1.
(12) Second detecting means for comparing the temperatures T1 and T2 detected by the temperature sensors 64 and 65, respectively, to detect the amount of oil existing in the sealed case 51c of the compressor 51.
(13) Control means for opening the two-way valve 23 at regular intervals, each time for a predetermined period.
(14) Control means for opening the two-way valve 71 of the outdoor unit A1 for a predetermined period, with the two-way valves 32 and 62 thereof closed, and opening the two-way valves 32 and 62 of the outdoor unit A2, with the two-way valve 71 thereof closed, when oil is found to be insufficient in the compressor 1 or 51 provided in the outdoor unit A1.
(15) Control means for opening the two-way valve 71 of the outdoor unit A2 for a predetermined period, with the two-way valves 32 and 62 thereof closed, and opening the two-way valves 32 and 62 of the outdoor unit A1, with the two-way valve 71 thereof closed, when oil is found to be insufficient in the compressor 1 or 51 provided in the outdoor unit A2.

The amount of lubricating oil is detected from the temperatures detected by the temperature sensors 34, 35, 64 and 65 in the same way as in the first embodiment.

If the lubricating oil L is found to be insufficient in the compressor 1 or 51 of the outdoor unit A1, the two-way valve 71 of the outdoor unit A1 opens, with the two-way valves 32 and 62 of the outdoor unit A1 closed, and the two-way valves 32 and 62 of the outdoor unit A2 open, with the two-way valve 71 of the outdoor unit A2 closed. The excessive part of the lubricating oil L in the compressors 1 and 51 of the outdoor unit A2 therefore flows into the outdoor unit A1 through the oil pipes 31 and 61 and oil pipe 80 of the outdoor unit A2 and the oil-flow pipe 72. In the outdoor unit A1, the lubricating oil L is drawn into the compressors 1 and 51 via the two-way valves 71, oil pipe 80 and a common refrigerant-drawing pipe 18 that remain open.

If the lubricating oil L is found to be insufficient in the compressor 1 or 51 of the outdoor unit A2, the two-way valve 71 of the outdoor unit A2 opens, with the two-way valves 32 and 62 of the outdoor unit A2 closed, and the two-way valves 32 and 62 of the outdoor unit A1 open, with the two-way valve 71 of the outdoor unit A1 closed. The excessive part of the lubricating oil L in the compressors 1 and 51 of the outdoor unit A1 therefore flows into the outdoor unit A2 through the oil pipes 31 and 61 and oil pipe 80 of the outdoor unit A1 and the oil-flow pipe 72. In the outdoor unit A2, the lubricating oil L is drawn into the compressors 1 and 51 via the two-way valves 71, oil pipe 80 and a common refrigerant-drawing pipe 18 that remain open.

Thus, the amount of the lubricating oil present in the sealed case 1c of the compressor 1 and the amount of lubricating oil present in the sealed case 51c of the compressor 51 can be detected reliably and correctly, without using mechanical floats switch such as the conventional oil-level adjusters of float-switch type and without the possibility of troubles or an increase in cost.

Although the lubricating oil L always flows from the sealed cases 1c and 51c into the oil pipe 31 and 61, respectively, if it is sufficient in the compressors 1 and 51. Nonetheless, the oil L immediately flows back into the compressors 1 and 51 through the oil pipes 31a and 61a, respectively. Hence, the detecting the amount of oil will not result in insufficiency of oil.

If the lubricating oil happens to be insufficient in the compressor 1 or 51 of one outdoor unit, the excessive part of the lubricating oil in the other outdoor unit is immediately supplied into the first-mentioned outdoor unit through the oil pipes 31, 61 and 80 and the oil-flow pipe 72. Thus, a so-called balanced tandem operation can be performed to replenish lubricating oil fast. In addition, the number of components required can be reduced, because the oil pipe 31, 61 and 80 are used as oil-flow pipes in the balanced tandem operation. The reduction in the number of parts achieves a reduction in the manufacturing cost of the apparatus.

In any other structural aspects, the ninth embodiment is identical to the second embodiment. Moreover, it operates in the same way as the second embodiment.

Each embodiment described above is an air conditioner. Nevertheless, the invention can be applied to any other type of a refrigerating apparatus.

In each embodiment, the compressors 1 and 51 of each outdoor unit may be driven by various drive means, such as one inverter drive (variable rotational-speed drive), a combination of inverter drives, a combination of an inverter drive and a commercially-available power-supply drive (constant rotational-speed drive), or a combination of commercially-available power-supply drives.

In the first to eighth embodiments, the two-way valves provided on the oil pipes are opened to detect the amount of oil. Instead, the oil pipes may be left open at all times as in the ninth embodiment to detect the amount of oil. This is because the lubricating oil and refrigerant flowing through the oil pipes flow back into the refrigerant-drawing side of the compressors.

The present invention is not limited to the embodiments described above. Rather, various changes and modification can be made without departing from the spirit and scope of the invention.

### Industrial Applicability

The present invention can be applied to, for example, an air conditioner that incorporates a refrigerating cycle.

## Claims

1. An refrigerating apparatus comprising:
a compressor which is covered with a sealed case filled in lubricating oil and which sucks and discharges refrigerant;
an oil pipe into which the lubricating oil flows from the sealed case of the compressor, the oil pipe connected between the sealed case of the compressor and a refrigerant-drawing pipe through which the refrigerant flows into the compressor;
a pressure reducing unit provided on the oil pipe;
a first temperature sensor which detects a temperature at that part of the oil pipe which lies at upstream of the pressure reducing unit;
a second temperature sensor which detects a temperature as that part of the oil pipe which lies at downstream of the pressure reducing unit; and
a detecting section which detects an amount of oil in the sealed case of the compressor from a difference between a temperature detected by the first temperature sensor and a temperature detected by the second temperature sensor.

2. The refrigerating apparatus according to claim 1, wherein the detecting section obtains the difference between the temperatures detected by the first and second temperature sensors and compares the difference with a preset value, to detect the amount of oil in the sealed case of the compressor.

3. The refrigerating apparatus according to claim 1, wherein the detecting section obtains a difference ΔT between a temperature T1 detected by the first temperature sensor and a temperature T2 detected by the second temperature sensor, and determines that the lubricating oil is insufficient in the sealed case of the compressor when the temperature difference ΔT is at least a preset value ΔTs.

4. The refrigerating apparatus according to claim 1, wherein the detecting section has a function of obtaining a difference ΔT between temperatures T1 and T2 detected by the first and second temperature sensors, respectively, and determining that the lubricating oil is insufficient in the compressor when the temperature difference ΔT is at least a preset value ΔTs, and a function of inferring remaining time t, upon lapse of which the lubricating oil will be insufficient in the sealed case of the compressor, from changes the temperature difference ΔT has undergone, when the temperature difference ΔT is less than the present value ΔTs.

5. The refrigerating apparatus according to claim 1, wherein the detecting section has a function of obtaining a difference ΔT between temperatures T1 and T2 detected by the first and second temperature sensors, respectively, and determining that the lubricating oil is insufficient in the compressor when the temperature difference ΔT is at least a preset value ΔTs, a function of inferring remaining time t, upon lapse of which the lubricating oil will be insufficient in the sealed case of the compressor, from changes the temperature difference ΔT has undergone, when the temperature difference ΔT is less than the present value ΔTs, and a function of determining that the lubricating oil is sufficient in the compressor when the remaining time t is longer than a preset time t1.

6. The refrigerating apparatus according to claim 1, further comprising a two-way valve which is provided on the oil pipe.

7. The refrigerating apparatus according to claim 6, wherein the detecting section opens the two-way valve at regular intervals and detects the amount of lubricating oil in the sealed case of the compressor from a difference between the temperatures detected by the first and second temperature sensors during each period the two-way valve remains open.

8. The refrigerating apparatus according to claim 1, further comprising:
an oil separator which is provided on a refrigerant-discharging pipe through which the refrigerant flows from the compressor and which separates lubricating oil from the refrigerant discharged from the compressor and accumulates the lubricating oil separated;
an oil-returning pipe which supplies the lubricating oil from the oil separator back into the refrigerant-drawing pipe;
a two-way valve which provided on the oil-returning pipe; and
a control section which opens the two-way valve when the detecting section detects that the lubricating oil is insufficient in the compressor.

9. A refrigerating apparatus comprising:
a plurality of compressors, each of which is covered with a sealed case filled with lubricating oil and sucks and discharges refrigerant, and which are connected in parallel by refrigerant pipes;
oil pipes into which lubricating oil flows from the sealed cases of the compressors, respectively, and which are connected between the sealed cases of the compressors and at least one refrigerant-drawing pipe;
a plurality of pressure reducing units which are provided on the oil pipes, respectively;
a plurality of first temperature sensors which are provided on the oil pipes, respectively, each configured to detect a temperature at upstream of the pressure reducing unit;
a plurality of second temperature sensors which are provided on the oil pipes, respectively, each configured to detect a temperature at downstream of the pressure reducing unit; and
a detecting section which detects an amount of lubricating oil in the sealed case of each compressor, from a difference between the temperatures detected by one first temperature sensor and the second temperature sensor associated with each compressor.

10. The refrigerating apparatus according to claim 9, wherein the detecting section obtains the difference between the temperatures detected by the first and second temperature sensors associated with each compressor, and compares the difference with a preset value to detect the amount of oil in the sealed case of the compressor.

11. The refrigerating apparatus according to claim 9, wherein the detecting section obtains the difference ΔT between the temperatures detected by the first and second temperature sensors associated with each compressor, compares the difference ΔT with a preset value ΔTs, and determines that the lubricating oil is insufficient in the sealed case of the compressor when the temperature difference ΔT is at least a preset value ΔTs for the oil pipes connected to the compressor.

12. The refrigerating apparatus according to claim 9, further comprising a plurality of two-way valves which are provided on the oil pipes, respectively.

13. The refrigerating apparatus according to claim 12, wherein the detecting section opens the two-way valves at regular intervals and detects the amount of lubricating oil in the sealed case of each compressor from a difference between the temperatures detected by the first and second temperature sensors associated with the compressor, during a period the two-way valve associated with the compressor remains open.

14. The refrigerating apparatus according to claim 13, further comprising a control section which controls the two-way valves to supply an excessive part of the lubricating oil in any compressor into another compressor through the oil pipe connected to the other compressor and said at least one refrigerant-drawing pipe, when the detecting section detects that the lubricating oil is insufficient in the other compressor.

15. The refrigerating apparatus according to claim 12, wherein the detecting section opens the two-way valves at regular intervals, each at a different time, and detects the amount of lubricating oil in the sealed case of each compressor from a difference between the temperatures detected by the first and second temperature sensors associated with the compressor, during a period the two-way valve associated with the compressor remains open.

16. The refrigerating apparatus according to claim 15, further comprising a control section which controls the two-way valves to supply an excessive part of the lubricating oil in any compressor into another compressor through the oil pipe connected to the other compressor and said at least one refrigerant-drawing pipe, when the detecting section detects that the lubricating oil is insufficient in the other compressor.

17. A refrigerating apparatus comprising:
a plurality of compressors, each of which is covered with a sealed case filled with lubricating oil and sucks and discharges refrigerant, and which are connected in parallel by refrigerant pipes;
first oil pipes into which lubricating oil flows from the sealed cases of the compressors, respectively, and which are connected to the sealed cases of the compressors, respectively;
a second oil pipe which supplies lubricating oil from each of the first oil pipes into one refrigerant-drawing pipe through which refrigerant to be suction into the compressors passes;
a pressure reducing unit provided on the second oil pipe;
a first temperature sensor which is provided on the second oil pipe and configured to detect a temperature at upstream of the pressure reducing unit;
a second temperature sensor which is provided on the second oil pipe and configured to detect a temperature at downstream of the pressure reducing unit; and
a detecting section which detects an amount of lubricating oil in the sealed case of each of the compressors, from a difference between the temperatures detected by the first and temperature sensors.

18. The refrigerating apparatus according to claim 17, wherein the detecting section obtains the difference between the temperatures detected by the first and second temperature sensors, and compares the difference with a preset value, to detect the amount of oil in the sealed case of each compressor.

19. The refrigerating apparatus according to claim 17, further comprising a plurality of two-way valves which are provided on the first oil pipes, respectively.

20. The refrigerating apparatus according to claim 19, wherein the detecting section opens two-way valves at regular intervals and detects the amount of lubricating oil in the sealed case of each compressor from a difference between the temperatures detected by the first and second temperature sensors during a period the two-way valve associated with the compressor remains open.

21. The refrigerating apparatus according to claim 20, further comprising a control section which controls the two-way valves to supply an excessive part of the lubricating oil in any compressor into another compressor through the first oil pipe connected to the other compressor, the second oil pipe and the refrigerant-drawing pipe, when the detecting section detects that the lubricating oil is insufficient in the other compressor.

22. The refrigerating apparatus according to claim 19, wherein the detecting section opens the two-way valves at regular intervals, each at a different time, and detects the amount of lubricating oil in the sealed case of each compressor from a difference between the temperatures detected by the first and second temperature sensors during a period the two-way valve associated with the compressor remains open.

23. The refrigerating apparatus according to claim 22, further comprising a control section which controls the two-way valves to supply an excessive part of the lubricating oil in any compressor into another compressor through the first oil pipe connected to the other compressor, the second oil pipe and the refrigerant-drawing pipe, when the detecting section detects that the lubricating oil is insufficient in the other compressor.

24. A refrigerating apparatus comprising:
a plurality of compressors, each of which is covered with a sealed case filled with lubricating oil and sucks and discharges refrigerant, and which are connected in parallel by refrigerant pipes;
oil pipes into which lubricating oil flows from the sealed cases of the compressors, respectively, and which are connected between the sealed cases of the compressors and at least one refrigerant-drawing pipe;
pressure reducing units provided on the oil pipes, respectively;
first temperature sensors which detect temperatures at those parts of the oil pipes which are at upstream of the pressure reducing units;
second temperature sensors which detect temperatures at those parts of the oil pipes which are downstream of the pressure reducing units;
first two-way valves provided on the oil pipes, respectively, each at upstream of the pressure reducing units;
second two-way valves provided on the oil pipes, respectively, each at downstream of the pressure reducing units;
at least one oil-flow pipe which connects the pressure reducing units provided on the oil pipes to the second two-way valves, respectively;
a third two-way valve provided on the oil-flow pipe;
a detecting section which opens the first and second two-way valves, and detects an amount of lubricating oil in the sealed case of each of the compressors from a difference between the temperatures detected by the first and second temperature sensors associated with the compressor, while the first and second two-way valves associated with the compressor remain open; and
a control section which controls the two-way valves to supply an excessive part of the lubricating oil in any compressor into another compressor through the oil pipe connected to the other compressor, said at least one oil-flow pipe and said at least one refrigerant-drawing pipe, when the lubricating oil is insufficient in the other compressor.

25. The refrigerating apparatus according to claim 24, wherein the detecting section obtains the difference between the temperatures detected by the first and second temperature sensors associated with each compressor, and compares the difference with a preset value, to detect the amount of oil in the sealed case of the compressor.

26. The refrigerating apparatus according to claim 24, wherein the detecting section opens the first and second two-way valves at regular intervals, and detects the amount of lubricating oil in the sealed case of each compressor from a difference between the temperatures detected by the first and second temperature sensors associated with the compressor, during a period the first and second two-way valves associated with the compressor remain open.

27. The refrigerating apparatus according to claim 24, wherein the detecting section opens the first and second two-way valves at regular intervals, each at a different time, and detects the amount of lubricating oil in the sealed case of each compressor from a difference between the temperatures detected by the first and second temperature sensors associated with the compressor, during a period the first and second two-way valves associated with the compressor remain open.

28. A refrigerating apparatus comprising:
a plurality of outdoor units connected in parallel by refrigerant pipes;
a plurality of compressors, each of which is covered with a sealed case filled with lubricating oil and sucks and discharges refrigerant, and which are divided into groups, each group provided in one outdoor unit and comprising a predetermined number of compressors that are connected in parallel by refrigerant pipes;
first oil pipes into which lubricating oil flows from the sealed cases of the compressors and which are connected to the sealed cases of the compressors, respectively;
second oil pipes, each provided in one outdoor unit and configured to supply lubricating oil from one first oil pipe into a refrigerant-drawing pipe through which refrigerant passes to be drawn into the compressors;
pressure reducing units provided on the first oil pipes, respectively;
first temperature sensors which detect temperatures at those parts of the first oil pipes which are at upstream of the pressure reducing units;
second temperature sensors which detect temperatures at those parts of the first oil pipes which are downstream of the pressure reducing unit;
first two-way valves provided on the first oil pipes, respectively;
second two-way valves provided on the second oil pipes, respectively;
at least one oil-flow pipe which connects those parts of the second oil pipes which are at upstream of the second two-way valves;
a detecting section which opens the first and second two-way valves, and detects an amount of lubricating oil in the sealed case of each of the compressors from a difference between the temperatures detected by the first and second temperature sensors associated with the compressor, while the first switch and second two-way valves associated with the compressor remain open; and
a control section which controls the two-way valves to supply an excessive part of the lubricating oil in any compressor into another compressor through the first and second oil pipes connected to the other compressor, said at least one oil-flow pipe and said at least one refrigerant-drawing pipe, when the lubricating oil is insufficient in the other compressor.

29. The refrigerating apparatus according to claim 28, wherein the detecting section opens the first and second valves and detects the amount of lubricating oil in the sealed case of each compressor from a difference between the temperatures detected by the first and second temperature sensors associated with the compressor, during a period the first and second two-way valves associated with the compressor remain open.

30. The refrigerating apparatus according to claim 28, wherein the detecting section opens the first and second two-way valves associated with each compressor, obtains a difference ΔT between temperatures T1 and T2 detected by the first and second temperature sensors associated with the compressor, and determines that the lubricating oil is insufficient in the sealed case of the compressor when the temperature difference ΔT is at least a preset value ΔTs for the oil pipes which are connected to the compressor.

31. A refrigerating apparatus comprising:
a plurality of outdoor units connected in parallel by refrigerant pipes;
a plurality of compressors, each of which is covered with a sealed case filled with lubricating oil and sucks and discharges refrigerant, and which are divided into groups, each group provided in one outdoor unit and comprising a predetermined number of compressors that are connected in parallel by refrigerant pipes;
first oil pipes into which lubricating oil flows from the sealed cases of the compressors and which are connected to the sealed cases of the compressors, respectively;
second oil pipes, each provided in one outdoor unit and configured to supply lubricating oil from one first oil pipe into a refrigerant-drawing pipe through which refrigerant passes to be drawn into the compressors;
pressure reducing units provided on the second oil pipes, respectively;
first temperature sensors which detect temperatures at those parts of the second oil pipes which are at upstream of the pressure reducing units;
second temperature sensors which detect temperatures at those parts of the second oil pipes which are downstream of the pressure reducing unit;
first two-way valves provided on the first oil pipes, respectively;
second two-way valves provided on the second oil pipes, respectively;
at least one oil-flow pipe which connects those parts of the second oil pipes which are at upstream of the second two-way valves;
a detecting section which opens the first and second two-way valves, and detects an amount of lubricating oil in the sealed case of each of the compressors from a difference between the temperatures detected by the first and second temperature sensors associated with the compressor, while the first switch and second two-way valves associated with the compressor remain open; and
a control section which controls the two-way valves to supply an excessive part of the lubricating oil in any compressor into another compressor through the first and second oil pipe connected to the other compressor, said at least one oil-flow pipe and said at least one refrigerant-drawing pipe, when the lubricating oil is insufficient in the other compressor.

32. The refrigerating apparatus according to claim 31, wherein the detecting section opens the first and second valves and detects the amount of lubricating oil in the sealed case of each compressor from a difference between the temperatures detected by the first and second temperature sensors associated with the compressor, during a period the first and second two-way valves associated with the compressor remain open.

33. The refrigerating apparatus according to claim 31, wherein the detecting section opens the first and second two-way valves associated with each compressor, obtains a difference ΔT between temperatures T1 and T2 detected by the first and second temperature sensors associated with the compressor, and determines that the lubricating oil is insufficient in the sealed case of the compressor when the temperature difference ΔT is at least a preset value ΔTs for the oil pipes which are connected to the compressor.

34. A refrigerating apparatus comprising:
a plurality of outdoor units connected in parallel by refrigerant pipes;
a plurality of compressors, each of which is covered with a sealed case filled with lubricating oil and sucks and discharges refrigerant, and which are divided into groups, each group provided in one outdoor unit and comprising a predetermined number of compressors that are connected in parallel by refrigerant pipes;
first oil pipes into which lubricating oil flows from the sealed cases of the compressors and which are connected to the sealed cases of the compressors, respectively;
second oil pipes, each provided in one outdoor unit and connected to one first oil pipe;
third oil pipes, each provided in one outdoor unit and configured to supply lubricating oil from a second oil pipe into a refrigerant-drawing pipe through which refrigerant passes to be drawn into the compressors;
pressure reducing units provided on the second oil pipes, respectively;
first temperature sensors which detect temperatures at those parts of the second oil pipes which are at upstream of the pressure reducing units;
second temperature sensors which detect temperatures at those parts of the second oil pipes which are downstream of the pressure reducing unit;
first two-way valves provided on the first oil pipes, respectively;
second two-way valves provided on the third oil pipes, respectively;
at least one oil-flow pipe which connects those parts of the second oil pipes which are at downstream of the pressure reducing units;
a third two-way valve provided on said at least oil-flow pipe;
a detecting section which opens the first and second two-way valves, and detects an amount of lubricating oil in the sealed case of each of the compressors from a difference between the temperatures detected by the first and second temperature sensors associated with the compressor, while the first switch and second two-way valves associated with the compressor remain open; and
a control section which controls the two-way valves to supply an excessive part of the lubricating oil in any compressor into another compressor through the first, second and third oil pipes connected to the other compressor, said at least one oil-flow pipe and said at least one refrigerant-drawing pipe, when the lubricating oil is insufficient in the other compressor.

35. The refrigerating apparatus according to claim 34, wherein the detecting section opens the first and second two-way valves associated with each compressor, obtains a difference between temperatures detected by the first and second temperature sensors associated with the compressor, and compares the difference with a preset value to determine that an amount of oil in the sealed case of the compressor.

36. The refrigerating apparatus according to claim 34, wherein the detecting section opens the first and second two-way valves associated with each compressor, obtains a difference ΔT between temperatures T1 and T2 detected by the first and second temperature sensors associated with the compressor, while the first and second two-way valves remain open, and determines that the lubricating oil is insufficient in the sealed case of the compressor when the temperature difference ΔT is at least a preset value ΔTs for the oil pipes which are connected to the compressor.

37. A refrigerating apparatus comprising:
a plurality of outdoor units connected in parallel by refrigerant pipes;
a plurality of compressors, each of which is covered with a sealed case filled with lubricating oil and sucks and discharges refrigerant, and which are divided into groups, each group provided in one outdoor unit and comprising a predetermined number of compressors that are connected in parallel by refrigerant pipes;
first oil pipes into which lubricating oil flows from the sealed cases of the compressors and which are connected to the sealed cases of the compressors, respectively;
second oil pipes, each provided in one outdoor unit and configured to supply lubricating oil from a first oil pipe into a refrigerant-drawing pipe through which refrigerant passes to be drawn into one compressor;
third oil pipes, each provided in one outdoor unit and configured to supply lubricating oil from a first oil into a plurality of individual refrigerant-drawing pipes through which refrigerant passes to be drawn into one compressor;
pressure reducing units provided on the third oil pipes, respectively;
first temperature sensors which detect temperatures at those parts of the third oil pipes which are at upstream of the pressure reducing units;
second temperature sensors which detect temperatures at those parts of the third oil pipes which are downstream of the pressure reducing unit;
first two-way valves provided on the first oil pipes, respectively;
second two-way valves provided on the second oil pipes, respectively;
at least one oil-flow pipe which connects those parts of the second oil pipes which are at upstream of the second two-way valves;
a detecting section which detects an amount of lubricating oil in the sealed case of each of the compressors from a difference between the temperatures detected by the first and second temperature sensors associated with the compressor; and
a control section which controls the two-way valves to supply an excessive part of the lubricating oil in any compressor into another compressor through the first and second oil pipes connected to the other compressor, said at least one oil-flow pipe, said at least one refrigerant-drawing pipe and the individual refrigerant-drawing pipes when the lubricating oil is insufficient in the other compressor.

38. The refrigerating apparatus according to claim 37, wherein the detecting section obtains a difference between temperatures detected by the first and second temperature sensors associated with each compressor and compares the difference with a preset value to determine that an amount of oil in the sealed case of the compressor.

39. The refrigerating apparatus according to claim 37, wherein the detecting section obtains a difference ΔT between temperatures T1 and T2 detected by the first and second temperature sensors associated with each compressor and determines that the lubricating oil is insufficient in the sealed case of the compressor when the temperature difference ΔT is at least a preset value ΔTs for the oil pipes which are connected to the compressor.
